(19) Europäisches Patentamt
European Patent Office
Office européen des brevets

(11) EP 4 778 626 A1

(12) EUROPEAN PATENT APPLICATION
published in accordance with Art. 153(4) EPC

(43) Date of publication:
22.07.2026 Bulletin 2026/30

(21) Application number: 24865472.5

(22) Date of filing: 11.09.2024

(51) International Patent Classification (IPC):
B01J 23/63 (2006.01)    B01D 53/94 (2006.01)
B01J 35/57 (2024.01)    F01N 3/10 (2006.01)
F01N 3/28 (2006.01)

(52) Cooperative Patent Classification (CPC):
B01D 53/94; B01J 23/63; B01J 35/57; F01N 3/10;
F01N 3/28

(86) International application number:
PCT/JP2024/032523

(87) International publication number:
WO 2025/057972 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.09.2023 JP 2023147768

(71) Applicant: Mitsui Kinzoku Company, Limited
Tokyo 141-8584 (JP)

(72) Inventors:
• ISAYAMA, Akihiro
  Ageo-shi, Saitama 362-0025 (JP)
• SAEKI, Shohei
  Ageo-shi, Saitama 362-0025 (JP)
• WATANABE, Tokuya
  Ageo-shi, Saitama 362-0025 (JP)
• IWAKURA, Hironori
  Ageo-shi, Saitama 362-0025 (JP)

(74) Representative: Novagraaf Technologies
2 rue Sarah Bernhardt
CS90017
92665 Asnières-sur-Seine Cedex (FR)

(54) EXHAUST GAS PURIFICATION CATALYST

(57) An object of the present invention is to provide an exhaust gas purification catalyst that uses Rh and La in combination and can effectively exhibit the action of La while suppressing a decrease in the exhaust gas purification performance (particularly NOx purification performance) of Rh caused by La, and in order to achieve this object, the present invention provides an exhaust gas purification catalyst (1) including: a substrate (10); a first catalyst layer (20) provided on an upstream side of the substrate (10); and a second catalyst layer (30) provided on a downstream side of the substrate (10), wherein the first catalyst layer (20) includes a lower layer (21) containing Pd and an upper layer (22) containing Rh, wherein the second catalyst layer (30) includes a lower layer (31) containing Pt and an upper layer (32) containing Rh, wherein a content of La in terms of $La_2O_3$ in the first catalyst layer (20) is 5% by mass or more based on a mass of the first catalyst layer (20), and wherein a content of La in terms of $La_2O_3$ in the second catalyst layer (30) is 3% by mass or less based on a mass of the second catalyst layer (30).

[Figure 6]

**Description**

**FIELD OF INVENTION**

The present invention relates to an exhaust gas purification catalyst.

**BACKGROUND ART**

Exhaust gas emitted from an internal combustion engine of an automobile, a motorcycle, or the like contains harmful components such as hydrocarbons (HC), carbon monoxide (CO), and nitrogen oxides (NOx). An exhaust gas purification catalyst containing noble metal elements such as Pt, Pd, and Rh is used to purify and detoxify these harmful components. Pt and Pd are mainly involved in oxidative purification of HC and CO, and Rh is mainly involved in reductive purification of NOx.

La has been used as a component of a catalyst layer of an exhaust gas purification catalyst (e.g., Patent Documents 1 and 2).

Due to the increasing demand for exhaust gas purification performance in recent years, an improvement in the exhaust gas purification performance of an exhaust gas purification catalyst has been required.

**CITATION LIST**

PATENT DOCUMENTS

Patent Document 1: Japanese Patent Laid-Open No. 2011-167631
Patent Document 2: Japanese Patent Laid-Open No. 2011-183317

**SUMMARY OF INVENTION**

TECHNICAL PROBLEM

La has an action of improving heat resistance. Therefore, heat resistance can be improved by increasing the content of La.

Since the exhaust gas purification performance (particularly NOx purification performance) of Rh decreases due to oxidation of Rh, it is preferable that Rh is used in a reducing atmosphere. However, La has an action of promoting oxidation of a noble metal element. Therefore, there is a concern that, in an exhaust gas purification catalyst using Rh and La in combination, increasing the content of La may cause Rh to be oxidized by La, resulting in a decrease in the exhaust gas purification performance (particularly NOx purification performance) of Rh.

An object of the present invention is to provide an exhaust gas purification catalyst that uses Rh and La in combination and can effectively exhibit the action of La while suppressing a decrease in the exhaust gas purification performance (particularly NOx purification performance) of Rh caused by La.

Another object of the present invention is to provide an exhaust gas purification system that uses Rh and La in combination and can effectively exhibit the action of La while suppressing a decrease in the exhaust gas purification performance (particularly NOx purification performance) of Rh caused by La.

SOLUTION TO PROBLEM

The present invention provides the following inventions.

[1] An exhaust gas purification catalyst including:

a substrate;
a first catalyst layer provided on an upstream side of the substrate; and
a second catalyst layer provided on a downstream side of the substrate,
wherein the first catalyst layer includes a lower layer containing Pd and an upper layer containing Rh,
wherein the second catalyst layer includes a lower layer containing Pt and an upper layer containing Rh,
wherein a content of La in terms of $La_2O_3$ in the first catalyst layer is 5% by mass or more based on a mass of the first catalyst layer, and

wherein a content of La in terms of $La_2O_3$ in the second catalyst layer is 3% by mass or less based on a mass of the second catalyst layer.

[2] The exhaust gas purification catalyst according to [1],

wherein a content of a noble metal element other than Pt in terms of metal in the lower layer of the second catalyst layer is 1% by mass or less based on a mass of the lower layer of the second catalyst layer, and
wherein a content of La in terms of $La_2O_3$ in the lower layer of the second catalyst layer is 2% by mass or less based on a mass of the lower layer of the second catalyst layer.

[3] The exhaust gas purification catalyst according to [1] or [2],

wherein a content of La in terms of $La_2O_3$ in the upper layer of the first catalyst layer is 5% by mass or more based on a mass of the upper layer of the first catalyst layer, and
wherein a content of La in terms of $La_2O_3$ in the upper layer of the second catalyst layer is 4% by mass or less based on a mass of the upper layer of the second catalyst layer.

[4] An exhaust gas purification system including:

an exhaust gas path through which exhaust gas flows;
a first exhaust gas purification catalyst provided on an upstream side of the exhaust gas path; and
a second exhaust gas purification catalyst provided on a downstream side of the exhaust gas path,
wherein the first exhaust gas purification catalyst includes a first substrate and a first catalyst layer provided on the first substrate,
wherein the second exhaust gas purification catalyst includes a second substrate and a second catalyst layer provided on the second substrate,
wherein the first catalyst layer includes a lower layer containing Pd and an upper layer containing Rh,
wherein the second catalyst layer includes a lower layer containing Pt and an upper layer containing Rh,
wherein a content of La in terms of $La_2O_3$ in the first catalyst layer is 5% by mass or more based on a mass of the first catalyst layer, and
wherein a content of La in terms of $La_2O_3$ in the second catalyst layer is 3% by mass or less based on a mass of the second catalyst layer.

[5] The exhaust gas purification system according to [4],

wherein a content of a noble metal element other than Pt in terms of metal in the lower layer of the second catalyst layer is 1% by mass or less based on a mass of the lower layer of the second catalyst layer, and
wherein a content of La in terms of $La_2O_3$ in the lower layer of the second catalyst layer is 2% by mass or less based on a mass of the lower layer of the second catalyst layer.

[6] The exhaust gas purification system according to [4] or [5],

wherein a content of La in terms of $La_2O_3$ in the upper layer of the first catalyst layer is 5% by mass or more based on a mass of the upper layer of the first catalyst layer, and
wherein a content of La in terms of $La_2O_3$ in the upper layer of the second catalyst layer is 4% by mass or less based on a mass of the upper layer of the second catalyst layer.

ADVANTAGEOUS EFFECTS OF INVENTION

The exhaust gas purification catalyst and exhaust gas purification system of the present invention can effectively exhibit the action of La while suppressing a decrease in the exhaust gas purification performance (particularly NOx purification performance) of Rh caused by La. Therefore, the exhaust gas purification catalyst and exhaust gas purification system of the present invention can effectively achieve an improvement in the exhaust gas purification performance.

**BRIEF DESCRIPTION OF DRAWINGS**

Figure 1 is a partial end view showing a state in which an exhaust gas purification catalyst according to an embodiment of the present invention is disposed in an exhaust gas path of an internal combustion engine.

Figure 2 is an end view taken along line A-A of Figure 1.

Figure 3 is an end view taken along line B-B of Figure 1.

Figure 4 is an enlarged view of a region denoted by the reference sign R1 in Figure 2.

Figure 5 is an enlarged view of a region denoted by the reference sign R2 in Figure 3.

Figure 6 is an end view taken along line C-C of Figure 1.

Figure 7 is a plan view of an exhaust gas purification system according to an embodiment of the present invention.

Figure 8 is an end view taken along line D-D of Figure 7.

Figure 9 is an end view taken along line E-E of Figure 7.

## DETAILED DESCRIPTION OF THE INVENTION

<< Description of terms >>

Hereinafter, the terms used in the present specification will be described. Unless otherwise specified, the following description is applied throughout the present specification. The following description regarding a catalyst layer is applied to all catalyst layers (e.g., the below-mentioned first catalyst layer 20, second catalyst layer 30, lower layer 21, upper layer 22, lower layer 31, upper layer 32, and the like).

< Metal element >

The term "metal element" also encompasses metalloid elements such as Si and B.

< Rare earth element >

The term "rare earth element" encompasses Sc, Y, La, Ce, Pr, Nd, Pm, Sm, Eu, Gd, Tb, Dy, Ho, Er, Tm, Yb, and Lu.

< Noble metal element >

The term "noble metal element" encompasses Pt, Pd, Rh, Ru, Os, Ir, Au, and Ag.

< Oxide >

The meaning of an "oxide" of a metal element is as follows. An oxide of a rare earth element excluding Ce, Pr, and Tb refers to a sesquioxide ($M_2O_3$, wherein M represents a rare earth element other than Ce, Pr, and Tb); an oxide of Ce refers to $CeO_2$; an oxide of Pr refers to $Pr_6O_{11}$; an oxide of Tb refers to $Tb_4O_7$; an oxide of Al refers to $Al_2O_3$; an oxide of Zr refers to $ZrO_2$; an oxide of Si refers to $SiO_2$; an oxide of B refers to $B_2O_3$; an oxide of Cr refers to $Cr_2O_3$; an oxide of Mg refers to MgO; an oxide of Ca refers to CaO; an oxide of Sr refers to SrO; an oxide of Ba refers to BaO; an oxide of Fe refers to $Fe_3O_4$; an oxide of Mn refers to $Mn_3O_4$; an oxide of Ni refers to NiO; an oxide of Ti refers to $TiO_2$; an oxide of Zn refers to ZnO; and an oxide of Sn refers to $SnO_2$.

< Mass of catalyst layer >

The expression "a mass of a catalyst layer" refers to the total mass calculated by classifying all metal elements contained in the catalyst layer into noble metal elements and metal elements other than noble metal elements, determining the masses of the noble metal elements in terms of metal and the masses of the metal elements other than noble metal elements in terms of oxide, and totalizing the determined masses. In other words, the expression "a mass of a catalyst layer" refers to the calculated mass obtained by totalizing the masses of noble metal elements contained in the catalyst layer in terms of metal and the masses of metal elements other than noble metal elements contained in the catalyst layer in terms of oxide.

< Content of noble metal element in terms of metal in catalyst layer and content of metal element other than noble metal element in terms of oxide in catalyst layer >

The expression "a content of a noble metal element in terms of metal in a catalyst layer" (% by mass) is determined by the formula: (the mass of the noble metal element in terms of metal in the catalyst layer) / (the mass of the

catalyst layer) $\times$ 100. The expression "a mass of a noble metal element in terms of metal" refers to the mass of a metal composed of the noble metal element, determined on the assumption that the noble metal element exists as the metal. For example, the mass of Pd in terms of metal, the mass of Pt in terms of metal, and the mass of Rh in terms of metal refer to the mass of metal Pd, the mass of metal Pt, and the mass of metal Rh, respectively. The meaning of "the mass of the catalyst layer" is as described above.

The expression "a content of a metal element in terms of oxide in a catalyst layer" (% by mass) is determined by the formula: (the mass of the metal element in terms of oxide in the catalyst layer) / (the mass of the catalyst layer) $\times$ 100. The expression "a mass of a metal element other than noble metal elements in terms of oxide" refers to the mass of an oxide of the metal element other than noble metal elements, determined on the assumption that the metal element other than noble metal elements exists as the oxide. The meanings of the "oxide" of the metal element and "the mass of the catalyst layer" are as described above.

For example, the "content of La in terms of $La_2O_3$ in a catalyst layer" (% by mass) is determined by the formula: (the mass of La in terms of $La_2O_3$ in the catalyst layer) / (the mass of the catalyst layer) $\times$ 100. The expression "the mass of La in terms of $La_2O_3$" refers to the mass of $La_2O_3$, determined on the assumption that La exists as $La_2O_3$.

In the case where information (e.g., composition, amount, and the like) about raw materials used to form a catalyst layer is known, the content (% by mass) of a noble metal element in terms of metal in the catalyst layer and the content (% by mass) of a metal element other than noble metal elements in terms of oxide in the catalyst layer can be determined from the information about the raw materials.

In the case where information about raw materials used to form a catalyst layer is not known, the content (% by mass) of a noble metal element in terms of metal in the catalyst layer and the content (% by mass) of a metal element other than noble metal elements in terms of oxide in the catalyst layer can be determined using a conventional method such as scanning electron microscopy-energy dispersive X-ray spectroscopy (SEM-EDX). A specific example is as described below.

Elemental analysis is performed on the catalyst layer using a conventional method such as SEM-EDX to identify the types of constituent elements of the catalyst layer and determine the mole percentage of each metal element identified. For each of 10 fields of view in SEM, the mole percentage of each metal element is determined, and the average mole percentage of each metal element determined from the 10 fields of view is defined as the mole percentage of each metal element in the catalyst layer.

For each noble metal element in the catalyst layer, a value V is calculated from the following formula:

Value V = (the mole percentage of each noble metal element in the catalyst layer) $\times$ (the molar mass of each noble metal element)

For each metal element other than noble metal elements in the catalyst layer, a value W is calculated from the following formula:

Value W = (the mole percentage of each metal element other than noble metal elements in the catalyst layer) $\times$ (the molar mass of oxide of each metal element)

The content (% by mass) of each noble metal element in terms of metal in the catalyst layer is calculated from the following formula:

The content (% by mass) of each noble metal element in terms of metal in the catalyst layer = (the value V for each noble metal element) / {(the total of the values V for all noble metal elements) + (the total of the values W for all the metal elements other than noble metal elements)} $\times$ 100

The content (% by mass) of each metal element other than noble metal elements in terms of oxide in the catalyst layer is calculated from the following formula:

The content (% by mass) of each metal element other than noble metal elements in terms of oxide in the catalyst layer = (the value W for each metal element other than noble metal elements) / {(the total of the values V for all noble metal elements) + (the total of the values W for all metal elements other than noble metal elements)} $\times$ 100

< **Al-based** oxide >

The term "Al-based oxide" refers to an oxide containing Al, wherein Al is the metal element with the highest mass-based content among the metal elements constituting the oxide. It should be noted that an oxide falling within the scope of a Ce-Zr-based complex oxide is excluded from the scope of the Al-based oxide. The Ce-Zr-based complex oxide will be described below. The Al-based oxide is distinct from alumina used as a binder. In the present specification, alumina used as a binder may be referred to as "alumina binder."

The Al-based oxide is, for example, in particulate form. The Al-based oxide is used as a carrier for a catalytically-active component. From the viewpoint of improving the supportability for a catalytically-active component, the Al-based oxide is preferably porous.

The Al-based oxide generally has higher heat resistance than other inorganic oxides (e.g., a Ce-based oxide and a Ce-Zr-based complex oxide). Accordingly, when a catalyst layer contains the Al-based oxide, the heat resistance of the catalyst layer is improved, thereby improving the exhaust gas purification performance of the catalyst layer.

The Al-based oxide may contain one or more elements other than Al (hereinafter referred to as "additional element M1"). The additional element M1 can be selected, for example, from rare earth elements (e.g., Ce, **Y,** Pr, La, Nd, Sm, Eu, and Gd), alkaline earth metal elements (e.g., Mg, Ca, Sr, and Ba), B, Si, Zr, Cr, and the like.

In the Al-based oxide, the additional element M1 may form a solid solution phase (e.g., a solid solution phase of $Al_2O_3$ and an oxide of the additional element M1), may form a single phase (e.g., an oxide phase of the additional element M1) that is a crystalline phase or an amorphous phase, or may form both a solid solution phase and a single phase. It is preferable that at least part of the additional element M1 forms a solid solution phase.

Examples of the method for preparing the Al-based oxide containing a solid solution phase include a co-precipitation method, a solid-phase method, and the like.

Examples of the Al-based oxide include alumina (an oxide composed of Al and O), an oxide obtained by modifying the surface of alumina with the additional element M1 or an oxide thereof, an oxide obtained by dissolving the additional element M1 or an oxide thereof in alumina, and the like. Examples of the Al-based oxide containing the additional element M1 include alumina-silica, alumina-zirconia, alumina-chromia, alumina-ceria, alumina-lanthana, and the like.

From the viewpoint of improving the heat resistance of the Al-based oxide, the content of Al in terms of $Al_2O_3$ in the Al-based oxide is preferably 80% by mass or more, more preferably 85% by mass or more, and even more preferably 90% by mass or more, based on the mass of the Al-based oxide. The upper limit is 100% by mass.

From the viewpoint of improving the heat resistance of the Al-based oxide, the Al-based oxide preferably contains La.

In the Al-based oxide containing La, it is preferable that at least part of La forms a solid solution phase (e.g., a solid solution phase of $Al_2O_3$ and $La_2O_3$). Although the detailed mechanism is not clear, it is considered that when at least part of La forms a solid solution phase, crystal strain increases, thereby improving the heat resistance of the Al-based oxide.

From the viewpoint of improving the heat resistance of the Al-based oxide, the content of La, in terms of $La_2O_3$, that forms a solid solution phase in the Al-based oxide is preferably 0.1% by mass or more and 20% by mass or less, more preferably 0.5% by mass or more and 15% by mass or less, and still more preferably 1% by mass or more and 10% by mass or less, based on the mass of the Al-based oxide.

The content of each metal element in terms of oxide in the Al-based oxide is calculated from the formula: (the mass of each metal element in terms of oxide in the Al-based oxide) / (the mass of the Al-based oxide) $\times$ 100. The mass of the Al-based oxide refers to the total mass of oxides of metal elements, determined on the assumption that each metal element in the Al-based oxide exists as an oxide. The meaning of the "oxide" is as described above.

In the case where the composition of the Al-based oxide is known, the content of each element in terms of oxide in the Al-based oxide can be determined from the composition of the Al-based oxide.

In the case where the composition of the Al-based oxide is not known, the content of each metal element in terms of oxide in the Al-based oxide can be determined by analyzing a sample containing the Al-based oxide using energy dispersive X-ray spectroscopy (EDX) to obtain an element mapping, and performing EDX elemental analysis on a designated particle in the obtained element mapping. Specifically, the content of each metal element in terms of oxide in the designated particle can be determined by qualitatively identifying (color-coding) Al-based oxide particles and other particles by element mapping, and performing compositional analysis (elemental analysis) on the designated particle.

Whether at least part of La in the Al-based oxide containing La forms a solid solution phase can be determined as follows. First, EDX elemental analysis is performed on a target Al-based oxide to confirm the presence of La therein. Next, the XRD diffraction pattern of the target Al-based oxide is measured using an XRD (X-ray diffraction measurement device). Then, the obtained XRD diffraction pattern is compared with reference data of the crystal structure of the target Al-based oxide (e.g., $\gamma$-alumina, $\theta$-alumina, $\delta$-alumina, $\alpha$-alumina, and the like) recorded in the ICSD (International Crystal Structure Database). In this comparison, the maximum peak position of the reference data is focused on. In the case where there is a peak shift toward the low-angle side relative to the maximum peak position in the XRD diffraction pattern of the target Al-based oxide, it can be determined that at least part of La in the target Al-based oxide forms a solid solution phase. In the case where all of La in the target Al-based oxide forms a solid solution phase, a peak derived from $La_2O_3$ does not appear in the XRD diffraction pattern. Therefore, when determining whether all of La in the target Al-based oxide forms a solid solution phase, it is preferable to confirm whether the peak originating from $La_2O_3$ appear in the XRD diffraction pattern.

Based on the amount of La determined by EDX elemental analysis and the degree of the peak shift, the content of La, in terms of $La_2O_3$, that forms a solid solution phase in the target Al-based oxide can be calculated. It is also possible to obtain a semi-quantitative value by performing XPS (X-ray photoelectron spectroscopy) measurement on the target Al-based oxide and analyzing the peak attributed to $LaAlO_3$. Thus, the content of La, in terms of $La_2O_3$, that forms a solid solution phase in the target Al-based oxide can be determined by comprehensively considering the analytical results of XRD, EDX, XPS, and the like.

< Ce-based oxide >

The term "Ce-based oxide" refers to an oxide containing Ce, wherein Ce is the metal element with the highest mass-based content among the metal elements constituting the oxide. It should be noted that an oxide falling within the scope of a Ce-Zr-based complex oxide is excluded from the scope of the Ce-based oxide. The Ce-Zr-based complex oxide will be described below. The Ce-based oxide is distinct from ceria used as a binder. In the present specification, ceria used as a binder may be referred to as "ceria binder."

The Ce-based oxide is, for example, in particulate form. The Ce-based oxide is used as a carrier for a catalytically-active component. From the viewpoint of improving the supportability for a catalytically-active component, the Ce-based oxide is preferably porous.

The Ce-based oxide has oxygen storage capacity, and mitigates fluctuations in the oxygen concentration of exhaust gas, thereby expanding the operating window of a catalytically-active component. Accordingly, when a catalyst layer contains the Ce-based oxide, the exhaust gas purification performance of the catalyst layer is improved.

The Ce-based oxide may contain one or more metal elements other than Ce (hereinafter referred to as "additional element M2"). The additional element M2 can be selected, for example, from rare earth elements other than Ce, alkaline earth metal elements (e.g., Mg, Ca, Sr, and Ba), Fe, Mn, Ni, Zr, Al, and the like.

In the Ce-based oxide, the additional element M2 may form a solid solution phase (e.g., a solid solution phase of $CeO_2$ and an oxide of the additional element M2), may form a single phase (e.g., an oxide phase of the additional element M2) that is a crystalline phase or an amorphous phase, or may form both a solid solution phase and a single phase. It is preferable that at least part of the additional element M2 forms a solid solution phase.

Examples of the method for preparing the Ce-based oxide containing a solid solution phase include a co-precipitation method and a solid-phase method.

Examples of the Ce-based oxide include ceria (an oxide composed of Ce and O), an oxide obtained by modifying the surface of ceria with the additional element M2 or an oxide thereof, and an oxide obtained by dissolving the additional element M2 or an oxide thereof in ceria.

< Ce-Zr-based complex oxide >

The term "Ce-Zr-based complex oxide" refers to a complex oxide containing Ce and Zr, wherein the content of Ce in terms of $CeO_2$ in the complex oxide is 5% by mass or more and 95% by mass or less based on the mass of the complex oxide, and wherein the content of Zr in terms of $ZrO_2$ in the complex oxide is 5% by mass or more and 95% by mass or less based on the mass of the complex oxide.

The Ce-Zr-based complex oxide is, for example, in particulate form. The Ce-Zr-based complex oxide is used as a carrier for a catalytically-active component. From the viewpoint of improving the supportability for a catalytically-active component, the Ce-Zr-based complex oxide is preferably porous.

The Ce-Zr-based complex oxide has oxygen storage capacity, and mitigates fluctuations in the oxygen concentration of exhaust gas, thereby expanding the operating window of a catalytically-active component. Accordingly, when a catalyst layer contains the Ce-Zr-based complex oxide, the exhaust gas purification performance of the catalyst layer is improved.

The Ce-Zr-based complex oxide may contain one or more metal elements other than Ce and Zr (hereinafter referred to as "additional element M3"). The additional element M3 can be selected, for example, from rare earth elements other than Ce, alkaline earth metal elements (e.g., Mg, Ca, Sr, and Ba), Fe, Mn, Ni, Zr, Al, and the like.

In the Ce-Zr-based complex oxide, Ce may form a solid solution phase (e.g., a solid solution phase of $CeO_2$ and $ZrO_2$), may form a single phase (e.g., a single phase of $CeO_2$) that is a crystalline phase or an amorphous phase, or may form both a solid solution phase and a single phase. It is preferable that at least part of Ce forms a solid solution phase.

In the Ce-Zr-based complex oxide, Zr may form a solid solution phase (e.g., a solid solution phase of $CeO_2$ and $ZrO_2$), may form a single phase (e.g., a single phase of $ZrO_2$) that is a crystalline phase or an amorphous phase, or may form both a solid solution phase and a single phase. It is preferable that at least part of Zr forms a solid solution phase.

In the case where the Ce-Zr-based complex oxide contains the additional element M3, the additional element M3 may form a solid solution phase (e.g., a solid solution phase of $CeO_2$ and an oxide of the additional element M3, a solid

solution phase of $ZrO_2$ and an oxide of the additional element M3, or a solid solution phase of $CeO_2$, $ZrO_2$, and an oxide of the additional element M3), may form a single phase (e.g., a single phase of an oxide of the additional element M3) that is a crystalline phase or an amorphous phase, or may form both a solid solution phase and a single phase. It is preferable that at least part of the additional element M3 forms a solid solution phase.

Examples of the method for preparing the Ce-Zr-based complex oxide containing a solid solution phase include a co-precipitation method and a solid-phase method.

Examples of the Ce-Zr-based complex oxide include a $CeO_2$-$ZrO_2$ solid solution, an oxide obtained by modifying the surface of a $CeO_2$-$ZrO_2$ solid solution with the additional element M3 or an oxide thereof, and an oxide obtained by dissolving the additional element M3 or an oxide thereof in a $CeO_2$-$ZrO_2$ solid solution.

From the viewpoint of improving the oxygen storage capacity of the Ce-Zr-based complex oxide, the content of Ce in terms of $CeO_2$ in the Ce-Zr-based complex oxide is preferably 5% by mass or more and 80% by mass or less, more preferably 10% by mass or more and 60% by mass or less, and still more preferably 10% by mass or more and 50% by mass or less, based on the mass of the Ce-Zr-based complex oxide.

From the viewpoint of improving the heat resistance of the Ce-Zr-based complex oxide, the content of Zr in terms of $ZrO_2$ in the Ce-Zr-based complex oxide is preferably 10% by mass or more and 95% by mass or less, more preferably 30% by mass or more and 90% by mass or less, and still more preferably 40% by mass or more and 90% by mass or less, based on the mass of the Ce-Zr-based complex oxide.

From the viewpoint of improving the oxygen storage capacity and heat resistance of the Ce-Zr-based complex oxide, the total content of Ce in terms of $CeO_2$ and Zr in terms of $ZrO_2$ in the Ce-Zr-based complex oxide is preferably 70% by mass or more, more preferably 80% by mass or more, and still more preferably 90% by mass or more, based on the mass of the Ce-Zr-based complex oxide. The upper limit is 100% by mass.

From the viewpoint of improving the heat resistance and oxygen storage capacity of the Ce-Zr-based complex oxide, the Ce-Zr-based complex oxide preferably contains La.

In the Ce-Zr-based complex oxide containing La, it is preferable that at least part of La forms a solid solution phase (e.g., a solid solution phase of $CeO_2$ and $La_2O_3$, a solid solution phase of $ZrO_2$ and $La_2O_3$, or a solid solution phase of $CeO_2$, $ZrO_2$, and $La_2O_3$). Although the detailed mechanism is not clear, it is considered that when at least part of La forms a solid solution phase, crystal strain increases, thereby improving the heat resistance and oxygen storage capacity of the Ce-Zr-based complex oxide.

From the viewpoint of improving the heat resistance and oxygen storage capacity of the Ce-Zr-based complex oxide, the content of La, in terms of $La_2O_3$, that forms a solid solution phase in the Ce-Zr-based complex oxide is preferably 0.1% by mass or more and 20% by mass or less, more preferably 0.5% by mass or more and 15% by mass or less, and still more preferably 1% by mass or more and 10% by mass or less, based on the mass of the Ce-Zr-based complex oxide.

The content of each metal element in terms of oxide in the Ce-Zr-based complex oxide is calculated from the formula: (the mass of each metal element in terms of oxide in the Ce-Zr-based complex oxide) / (the mass of the Ce-Zr-based complex oxide) $\times$ 100. The mass of the Ce-Zr-based complex oxide refers to the total mass of oxides of metal elements, determined on the assumption that each metal element in the Ce-Zr-based complex oxide exists as an oxide. The meaning of the "oxide" is as described above.

The content of each metal element in terms of oxide in the Ce-Zr-based complex oxide can be determined in the same manner as the content of each metal element in terms of oxide in the Al-based oxide.

Whether at least part of La forms a solid solution phase in the Ce-Zr-based complex oxide containing La can be determined in the same manner as whether at least part of La forms a solid solution phase in the Al-based oxide containing La. When the XRD diffraction pattern of a target Ce-Zr-based complex oxide is compared with reference data of the crystal structure of the target Ce-Zr-based complex oxide, the data of fluorite-type $CeO_2$-$ZrO_2$, pyrochlore-type $CeO_2ZrO_2$, and the like recorded in the ICSD can be used as reference data of the crystal structure of the target Ce-Zr-based complex oxide. The content of La, in terms of $La_2O_3$, that forms a solid solution phase in the Ce-Zr-based complex oxide can be determined in the same manner as the content of La, in terms of $La_2O_3$, that forms a solid solution phase in the Al-based oxide.

<< Exhaust gas purification catalyst >>

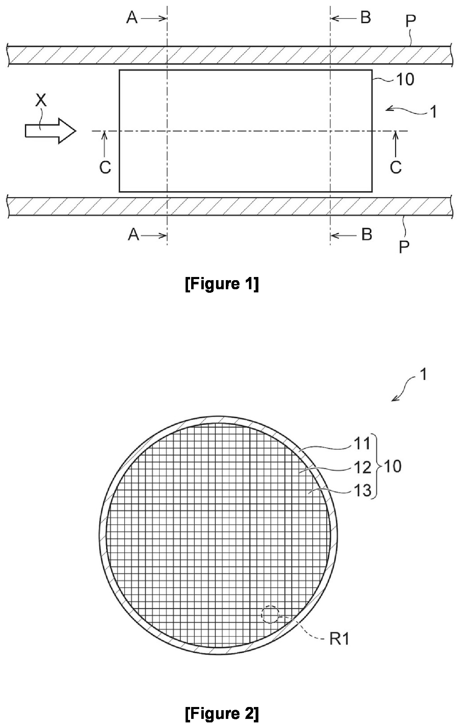

Hereinafter, an exhaust gas purification catalyst 1 (hereinafter referred to as "catalyst 1") according to an embodiment of the present invention will be described with reference to Figures 1 to 6.

As shown in Figure 1, the catalyst 1 is disposed in an exhaust gas path of an exhaust pipe P of an internal combustion engine. The internal combustion engine is, for example, a gasoline engine. Exhaust gas emitted from the internal combustion engine flows through the exhaust gas path of the exhaust pipe P from one end of the exhaust pipe P to the other end of the exhaust pipe P, and is purified by the catalyst 1 provided in the exhaust pipe P. In the drawings, the exhaust gas flow direction is denoted by the reference sign X. In the present specification, an upstream position in the exhaust gas flow direction X may be referred to as "exhaust gas inflow side" or "upstream side", and a downstream position in the exhaust gas flow direction X may be referred to as "exhaust gas outflow side" or "downstream side".

In the exhaust gas path of the exhaust pipe P, another exhaust gas purification catalyst may be disposed on the upstream or downstream side of the catalyst 1.

As shown in Figures 2 to 6, the catalyst 1 includes a substrate 10, a first catalyst layer 20 provided on the upstream side of the substrate 10, and a second catalyst layer 30 provided on the downstream side of the substrate 10.

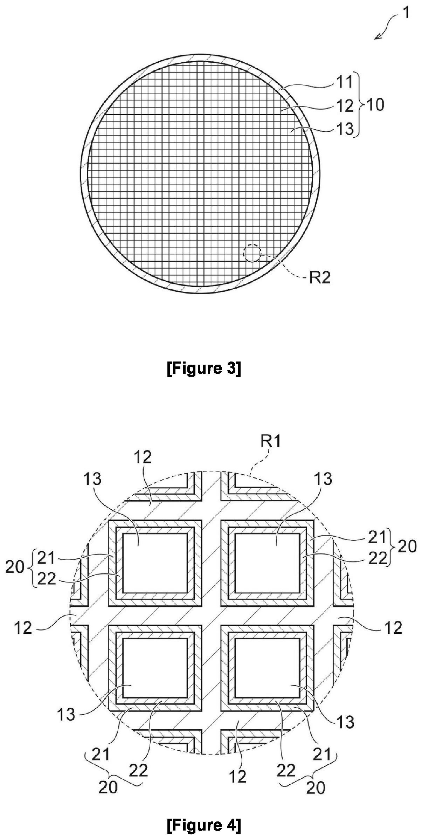

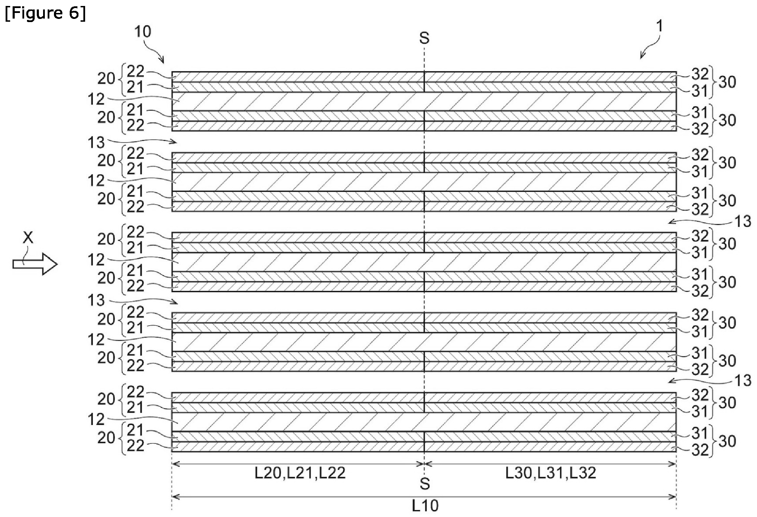

As shown in Figures 4 and 6, the first catalyst layer 20 includes a lower layer 21 provided on the substrate 10, and an upper layer 22 provided on the lower layer 21. The lower layer 21 contains Pd, and the upper layer 22 contains Rh. The whole of the first catalyst layer 20 may be composed of both the lower layer 21 and the upper layer 22, but it is not essential that the whole of the first catalyst layer 20 is composed of both the lower layer 21 and the upper layer 22. A part of the first catalyst layer 20 may be composed of either the lower layer 21 or the upper layer 22. Accordingly, in addition to a portion composed of both the lower layer 21 and the upper layer 22, a portion composed of either the lower layer 21 or the upper layer 22 also constitutes a part of the first catalyst layer 20.

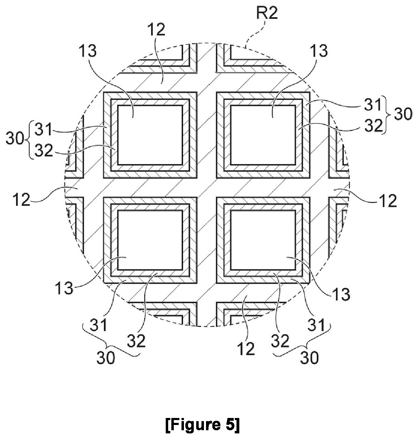

As shown in Figures 5 and 6, the second catalyst layer 30 includes a lower layer 31 provided on the substrate 10, and an upper layer 32 provided on the lower layer 31. The lower layer 31 contains Pt, and the upper layer 32 contains Rh. The whole of the second catalyst layer 30 may be composed of both the lower layer 31 and the upper layer 32, but it is not essential that the whole of the second catalyst layer 30 is composed of both the lower layer 31 and the upper layer 32. A part of the second catalyst layer 30 may be composed of either the lower layer 31 or the upper layer 32. Accordingly, in addition to a portion composed of both the lower layer 31 and the upper layer 32, a portion composed of either the lower layer 31 or the upper layer 32 also constitutes a part of the second catalyst layer 30.

In the present specification, the lower layer refers to a layer located closer to the partition wall 12 compared to the upper layer.

The catalyst 1 is characterized in that the content of La in terms of $La_2O_3$ in the first catalyst layer 20 is 5% by mass or more based on the mass of the first catalyst layer 20, and that the content of La in terms of $La_2O_3$ in the second catalyst layer 30 is 3% by mass or less based on the mass of the second catalyst layer 30.

In the catalyst 1, the first catalyst layer 20 is provided on the upstream side of the substrate 10, and the second catalyst layer 30 is provided on the downstream side of the substrate 10. Therefore, exhaust gas contacts the first catalyst layer 20 and then contacts the second catalyst layer 30. As a result, the temperature of the exhaust gas that comes into contact with the first catalyst layer 20 is higher than that of the exhaust gas that comes into contact with the second catalyst layer 30. Accordingly, the first catalyst layer 20 is required to have higher heat resistance than the second catalyst layer 30.

La has an action of improving heat resistance. Therefore, the heat resistance of the first catalyst layer 20 can be improved by increasing the content of La in terms of $La_2O_3$ in the first catalyst layer 20.

Since the exhaust gas purification performance (particularly NOx purification performance) of Rh decreases due to oxidation of Rh, it is preferable that Rh is used in a reducing atmosphere. On the other hand, La has an action of promoting oxidation of a noble metal element. Therefore, there is a concern that increasing the content of La in terms of $La_2O_3$ in the first catalyst layer 20 may cause Rh in the first catalyst layer 20 to be oxidized by La in the first catalyst layer 20, resulting in a decrease in the exhaust gas purification performance (particularly NOx purification performance) of Rh in the first catalyst layer 20. However, since the first catalyst layer 20 is provided on the upstream side of the substrate 10, the amount of reducing components (e.g., hydrocarbons (HC), carbon monoxide (CO), and the like) in the exhaust gas that comes into contact with the first catalyst layer 20 varies depending on operating conditions of the internal combustion engine and temporarily increases. As a result, even if Rh in the first catalyst layer 20 is oxidized by La in the first catalyst layer 20, the oxidized Rh can be reduced by the temporarily increased reducing components. Accordingly, even if the content of La in terms of $La_2O_3$ in the first catalyst layer 20 is increased, a decrease in the exhaust gas purification performance (particularly NOx purification performance) of Rh in the first catalyst layer 20 caused by La in the first catalyst layer 20 can be suppressed.

Since exhaust gas contacts the first catalyst layer 20 and then contacts the second catalyst layer 30, the amount of reducing components in the exhaust gas that comes into contact with the second catalyst layer 30 is less likely to fluctuate and temporarily increase. Therefore, when Rh in the second catalyst layer 30 is oxidized by La in the second catalyst layer 30, the oxidized Rh is less likely to be reduced. On the other hand, since exhaust gas contacts the first catalyst layer 20 and then contacts the second catalyst layer 30, the temperature of the exhaust gas that comes into contact with the second catalyst layer 30 is lower than that of the exhaust gas that comes into contact with the first catalyst layer 20. Accordingly, it is acceptable for the second catalyst layer 30 to have lower heat resistance than the first catalyst layer 20.

As described above, with respect to the first catalyst layer 20, it is required to increase the content of La in terms of $La_2O_3$ in the first catalyst layer 20 from the viewpoint of improving the heat resistance of the first catalyst layer 20, rather than decreasing the content of La in terms of $La_2O_3$ in the first catalyst layer 20 from the viewpoint of suppressing a decrease in the exhaust gas purification performance (particularly NOx purification performance) of Rh in the first catalyst layer 20 caused by La in the first catalyst layer 20, whereas, with respect to the second catalyst layer 30, it is required to decrease the content of La in terms of $La_2O_3$ in the second catalyst layer 30 from the viewpoint of suppressing a decrease in the exhaust gas purification performance (particularly NOx purification performance) of Rh in the second catalyst layer 30 caused by La in the second catalyst layer 30, rather than increasing the content of La in terms of $La_2O_3$ in the second catalyst layer 30 from the viewpoint of improving the heat resistance of the second catalyst layer 30. Accordingly, the catalyst 1 is characterized in that the content of La in terms of $La_2O_3$ in the first catalyst layer 20 is 5% by mass or more based on the mass of the first catalyst layer 20, and that the content of La in terms of $La_2O_3$ in the second catalyst layer 30 is 3% by mass or less based on the mass of the second catalyst layer 30. The catalyst 1 can effectively exhibit the action of La while suppressing a decrease in the exhaust gas purification performance (particularly NOx purification performance) of Rh caused by La, thereby achieving an improvement in the exhaust gas purification performance.

In addition to having an action of improving heat resistance, La has an action of trapping a phosphorus component to prevent phosphorus poisoning of a noble metal element. In the case where a Ce-Zr-based complex oxide contains La, La in the Ce-Zr-based complex oxide has an action of improving the oxygen storage capacity of the Ce-Zr-based complex oxide. These actions of La also contribute to the improvement of the exhaust gas purification performance of the catalyst 1.

< Substrate >

Hereinafter, the substrate 10 will be described.

The material constituting the substrate 10 can be appropriately selected from known materials. Examples of the material constituting the substrate 10 include a ceramic material and a metal material. The ceramic material is preferred. Examples of the ceramic material include carbide ceramics such as silicon carbide, titanium carbide, tantalum carbide, and tungsten carbide; nitride ceramics such as aluminum nitride, silicon nitride, boron nitride, and titanium nitride; and oxide ceramics such as alumina, zirconia, cordierite, mullite, zircon, aluminum titanate, and magnesium titanate. Examples of the metal material include alloys such as stainless steel.

As shown in Figure 1, the catalyst 1 is disposed in the exhaust gas path of the internal combustion engine such that the axial direction of the substrate 10 coincides with or roughly coincides with the exhaust gas flow direction X.

As shown in Figures 2 to 6, the substrate 10 includes a tubular member 11, a partition wall 12 provided inside the tubular member 11, and cells 13 separated from one another by the partition wall 12. The substrate 10 preferably has a honeycomb structure.

As shown in Figures 2 and 3, the tubular member 11 defines the external shape of the substrate 10, and the axial direction of the tubular member 11 coincides with the axis direction of the substrate 10. As shown in Figures 2 and 3, the tubular member 11 has a hollow cylindrical shape, but it may have another shape such as a hollow elliptic cylindrical shape or a polygonal tubular shape.

As shown in Figures 2 and 3, the partition wall 12 is provided inside the tubular member 11. As shown in Figures 2 to 6, the partition wall 12 is present between adjacent cells 13, whereby the adjacent cells 13 are separated from each other by the partition wall 12. The partition wall 12 may have a porous structure that allows exhaust gas to pass through. The thickness of the partition wall 12 is, for example, 20 $\mu$m or more and 1500 $\mu$m or less.

As shown in Figure 6, each cell 13 extends in the exhaust gas flow direction X and has an end on the exhaust gas inflow side and an end on the exhaust gas outflow side.

As shown in Figure 6, both the end on the exhaust gas inflow side and the end on the exhaust gas outflow side of each cell 13 are open. Therefore, exhaust gas flows in from the end (opening) on the exhaust gas inflow side of each cell 13 and flows out from the end (opening) on the exhaust gas outflow side of each cell 13. Such a configuration is called a flow-through type.

As shown in Figures 2 to 5, the shape in a plan view of the end (opening) on the exhaust gas inflow side of each cell 13 is a rectangle, but may be another shape such as a hexagon or an octagon. The same applies to the **shape in a** plan view of the end (opening) on the exhaust gas outflow side of each cell 13.

The cell density per square inch of the substrate 10 is, for example, 100 cells or more and 1000 cells or less. The cell density per square inch of the substrate 10 refers to the total number of cells 13 per square inch in a cross section obtained by cutting the substrate 10 along a plane perpendicular to the exhaust gas flow direction X.

The volume of the substrate 10 is, for example, 0.1 L or more and 20 L or less. The volume of the substrate 10 refers to the apparent volume of the substrate 10. For example, in the case where the substrate 10 is in the form of a cylinder, the outer diameter of the substrate 10 is 2r, and the length of the substrate 10 is L, the volume of the substrate 10 is represented by the formula: the volume of substrate $10 = \pi \times r^2 \times L$. In the present specification, the term "length" refers to the dimension in the axial direction of the substrate 10.

< First catalyst layer >

Hereinafter, the first catalyst layer 20 will be described.

As shown in Figures 4 and 6, the first catalyst layer 20 is provided on an upstream region of the surface on the cell 13 side of the partition wall 12. The expression "the surface on the cell 13 side of the partition wall 12" refers to an outer surface of the partition wall 12, the outer surface extending in the exhaust gas flow direction X. The term "upstream region" refers to a region that extends from the end on the exhaust gas inflow side of the partition wall 12 along the exhaust gas flow direction X so as not to reach the end on the exhaust gas outflow side of the partition wall 12. The first catalyst layer 20 may be provided directly or via another layer on the surface on the cell 13 side of the partition wall 12. Usually, the first catalyst layer 20 is provided directly on the surface on the cell 13 side of the partition wall 12.

As shown in Figure 6, the first catalyst layer 20 extends from the end on the exhaust gas inflow side of the partition wall 12 along the exhaust gas flow direction X so as not to reach the end on the exhaust gas outflow side of the partition wall 12.

From the viewpoint of balancing the exhaust gas purification performance and the cost, the mass (mass after calcining) of the first catalyst layer 20 per unit volume of the portion of the substrate 10 provided with the first catalyst layer 20 is preferably 70 g/L or more and 380 g/L or less, more preferably 120 g/L or more and 300 g/L or less, and still more preferably 150 g/L or more and 250 g/L or less.

The mass of the first catalyst layer 20 per unit volume of the portion of the substrate 10 provided with the first catalyst layer 20 is calculated from the formula: (the mass of the first catalyst layer 20) / ((the volume of the substrate 10) $\times$ (the average length $L_{20}$ of the first catalyst layer 20 / the length $L_{10}$ of the substrate 10)).

One example of the method for measuring the average length $L_{20}$ of the first catalyst layer 20 is as follows:

A sample that extends in the axial direction of the substrate 10 and has the same length as the length $L_{10}$ of the substrate 10 is cut out from the catalyst 1. The sample is, for example, in the form of a cylinder having a diameter of 25.4 mm. The diameter of the sample can be changed as necessary. The sample is cut at 5 mm intervals along planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using an X-ray fluorescence analyzer (XRF) (e.g., an energy dispersive X-ray analyzer (EDX), a wavelength dispersive X-ray analyzer (WDX), or the like), an inductively coupled plasma-atomic emission spectroscopy (ICP-AES), a scanning electron microscopy-energy dispersive X-ray spectroscopy (SEM-EDX), or the like. Based on the composition of each cut piece, it is confirmed whether or not each cut piece includes part of the first catalyst layer 20.

It is not necessarily required to perform the compositional analysis for a cut piece that apparently includes part of the first catalyst layer 20. For example, it is possible to confirm whether or not each cut piece includes part of the first catalyst layer 20 by observing a cross section thereof using a scanning electron microscope (SEM), an electron probe microanalyzer (EPMA), or the like. When observing the cross section, element mapping of the cross section may be performed.

After confirming whether or not each cut piece includes part of the first catalyst layer 20, the length of the first catalyst layer 20 included in the sample is calculated based on the following formula:

The length of the first catalyst layer 20 included in the sample = 5 mm $\times$ (the number of cut pieces each including part of the first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 $\times$ k) mm.

One example of the method for more specifically measuring the length of the first catalyst layer 20 included in the sample is as follows:

The k-th cut piece (i.e., the cut piece obtained from the position closest to the end on the exhaust gas outflow side of the sample, among the cut pieces each including part of the first catalyst layer 20) is cut along the axial direction of the substrate 10, and part of the first catalyst layer 20 existing in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula:

The length of the first catalyst layer 20 included in the sample = (5 mm $\times$ (k-1)) + (the length of part of the first catalyst layer 20 included in the k-th cut piece)

For 8 to 16 samples arbitrarily cut out from the catalyst 1, the length of the first catalyst layer 20 included in each sample is measured, and the average value of the measured lengths is defined as the average length $L_{20}$ of the first catalyst layer 20.

The larger the average length $L_{20}$ of the first catalyst layer 20, the longer the contact time between the first catalyst layer 20 and the exhaust gas becomes. Accordingly, in the case where the conditions other than the average length $L_{20}$ of the first catalyst layer 20 are the same, the larger the average length $L_{20}$ of the first catalyst layer 20, the more effectively the first catalyst layer 20 reacts with the exhaust gas, and the smaller the amount of reducing exhaust gas that reaches the second catalyst layer 30. As a result, the environment becomes such that the reduction of Rh in the second catalyst layer 30 is less likely to occur. Therefore, in the second catalyst layer 30 where the amount of La, which promotes oxidation of Rh, is small, the reduction action of Rh can be more effectively exhibited, and a decrease in the exhaust gas purification performance (particularly NOx purification performance) can be suppressed.

The percentage of the average length $L_{20}$ of the first catalyst layer 20 to the length $L_{10}$ of the substrate 10 ($L_{20} / L_{10} \times 100$) is preferably 30% or more, more preferably 40% or more, and still more preferably 50% or more. The upper limit can be appropriately adjusted in consideration of the balance between the exhaust gas purification performance and the cost, and the like. The upper limit is preferably 90% or less, more preferably 80% or less, and still more preferably 70% or less. Each of these upper limits may be combined with any of the above-described lower limits.

The above description regarding the percentage of the average length $L_{20}$ of the first catalyst layer 20 to the length $L_{10}$ of the substrate 10 ($L_{20} / L_{10} \times 100$) is also applied to the percentage of the average length $L_{21}$ of the lower layer 21 of the first catalyst layer 20 to the length $L_{10}$ of the substrate 10 ($L_{21} / L_{10} \times 100$) and the percentage of the average length $L_{22}$ of the upper layer 22 of the first catalyst layer 20 to the length $L_{10}$ of the substrate 10 ($L_{22} / L_{10} \times 100$). The percentage of the average length $L_{21}$ of the lower layer 21 of the first catalyst layer 20 to the length $L_{10}$ of the substrate 10 and the percentage of the average length $L_{22}$ of the upper layer 22 of the first catalyst layer 20 to the length $L_{10}$ of the substrate 10 may be the same or different.

The first catalyst layer 20 contains La. As a result, the heat resistance of the first catalyst layer 20 is improved. In addition, phosphorus poisoning of a noble metal element in the first catalyst layer 20 is suppressed. Further, through oxidation of Pd by La, the exhaust gas purification performance of Pd in the first catalyst layer 20 is improved. Furthermore, in the case where a Ce-Zr-based complex oxide in the first catalyst layer 20 contains La, the heat resistance and oxygen storage capacity of the Ce-Zr-based complex oxide in the first catalyst layer 20 are improved.

At least one of the lower layers 21 and the upper layer 22 contains La. In one embodiment, one of the lower layers 21 and the upper layer 22 contains La, and the other does not contain La. In another embodiment, both the lower layer 21 and the upper layer 22 contain La. From the viewpoint of effectively exhibiting the action of La, it is preferable that both the lower layer 21 and the upper layer 22 contain La.

The first catalyst layer 20 contains one or more La sources. The La source is an oxide containing La. The La source can be selected, for example, from an Al-based oxide containing La, a Ce-based oxide containing La, a Ce-Zr-based complex oxide containing La, and the like.

From the viewpoint of improving the heat resistance and/or oxygen storage capacity of the first catalyst layer 20, the La source is preferably selected from an Al-based oxide containing La and a Ce-Zr-based complex oxide containing La. In one embodiment, the first catalyst layer 20 contains, as La sources, an Al-based oxide containing La and a Ce-Zr-based complex oxide containing La. An Al-based oxide containing La contributes to improving the heat resistance of the first catalyst layer 20. A Ce-Zr-based complex oxide containing La contributes to improving the heat resistance and oxygen storage capacity of the first catalyst layer 20.

From the viewpoint of effectively exhibiting the action of La, the content of La in terms of $La_2O_3$ in the first catalyst layer 20 is preferably 5.5% by mass or more, and more preferably 6% by mass or more, based on the mass of the first catalyst layer 20. The upper limit can be appropriately adjusted in consideration of the balance between the exhaust gas purification performance and the cost, the content of other components, and the like. The upper limit is preferably 20% by mass or less, more preferably 15% by mass or less, and still more preferably 10% by mass or less. Each of these upper limits may be combined with any of the above-described lower limits.

With respect to a catalyst layer, the expression "the content of La in terms of $La_2O_3$ in the catalyst layer" refers to: in the case where the catalyst layer contains a single La source, the content of La in terms of $La_2O_3$ derived from the single La source; and in the case where the catalyst layer contains multiple La sources, the total content of La in terms of $La_2O_3$ derived from the multiple La sources. This definition is applied to all catalyst layers (e.g., the first catalyst layer 20, the second catalyst layer 30, the lower layer 21, the upper layer 22, the lower layer 31, the upper layer 32, and the like).

The proportion of the mass of La in terms of $La_2O_3$ derived from an Al-based oxide containing La and a Ce-Zr-based complex oxide containing La to the mass of La in terms of $La_2O_3$ in the first catalyst layer 20 is preferably 70% by mass or more, more preferably 80% by mass or more, and still more preferably 90% by mass or more. The upper limit is 100% by mass.

With respect to a catalyst layer, the expression "the mass of La in terms of $La_2O_3$ derived from an Al-based oxide containing La and a Ce-Zr-based complex oxide containing La" refers to: in the case where the catalyst layer contains an Al-based oxide containing La and does not contain a Ce-Zr-based complex oxide containing La, the mass of La in terms of $La_2O_3$ derived from the Al-based oxide containing La; in the case where the catalyst layer contains a Ce-Zr-based complex oxide containing La and does not contain an Al-based oxide containing La, the mass of La in terms of $La_2O_3$ derived from the Ce-Zr-based complex oxide containing La; and in the case where the catalyst layer contains both an Al-based oxide containing La and a Ce-Zr-based complex oxide containing La, the total mass of La in terms of $La_2O_3$ derived from the Al-based oxide containing La and La in terms of $La_2O_3$ derived from the Ce-Zr-based complex oxide containing La. This definition is applied to all catalyst layers (e.g., the first catalyst layer 20, the second catalyst layer 30, the lower layer 21, the upper layer 22, the lower layer 31, the upper layer 32, and the like).

< Lower layer of first catalyst layer >

Hereinafter, the lower layer 21 of the first catalyst layer 20 will be described.

As shown in Figures 4 and 6, the lower layer 21 is provided on an upstream region of the surface on the cell 13 side of the partition wall 12. The meanings of the expression "the surface on the cell 13 side of the partition wall 12" and the term "upstream region" are as described above. The lower layer 21 may be provided directly or via another layer on the surface on the cell 13 side of the partition wall 12. Usually, the lower layer 21 is provided directly on the surface on the cell 13 side of the partition wall 12.

The lower layer 21 may be composed of a structure rising from the surface on the cell 13 side of the partition wall 12 toward the cell 13 side (hereinafter referred to as "rising structure"), or may be composed of a structure present inside the partition wall 12 (hereinafter referred to as "internal structure"), or may have both the rising structure and the internal structure. The present invention encompasses an embodiment wherein the lower layer 21 is composed of the rising structure, an embodiment wherein the lower layer 21 is composed of the internal structure, and an embodiment wherein the lower layer 21 has both the rising structure and the internal structure.

As shown in Figures 4 and 6, the lower layer 21 preferably has the rising structure. As a result, the contactability between the lower layer 21 and the exhaust gas is improved, thereby improving the exhaust gas purification performance.

As shown in Figure 6, the lower layer 21 extends from the end on the exhaust gas inflow side of the partition wall 12 along the exhaust gas flow direction X so as not to reach the end on the exhaust gas outflow side of the partition wall 12.

From the viewpoint of balancing the exhaust gas purification performance and the cost, the mass (mass after calcining) of the lower layer 21 per unit volume of the portion of the substrate 10 provided with the lower layer 21 is preferably 50 g/L or more and 230 g/L or less, more preferably 70 g/L or more and 180 g/L or less, and still more preferably 80 g/L or more and 150 g/L or less.

The mass of the lower layer 21 per unit volume of the portion of the substrate 10 provided with the lower layer 21 is calculated from the formula:

(the mass of the lower layer 21) / ((the volume of the substrate 10) $\times$ (the average length $L_{21}$ of the lower layer 21 / the length $L_{10}$ of the substrate 10)).

The above description regarding the average length $L_{20}$ of the first catalyst layer 20 is also applied to the average length $L_{21}$ of the lower layer 21. Upon application, the "first catalyst layer 20" and the "average length $L_{20}$" are replaced with the "lower layer 21" and the "average length $L_{21}$", respectively.

The lower layer 21 contains Pd.

The lower layer 21 is covered by the upper layer 22. Therefore, a noble metal element in the lower layer 21 is less susceptible to phosphorus poisoning, whereas a noble metal element in the upper layer 22 is more susceptible to phosphorus poisoning. On the other hand, Pd is more susceptible to phosphorus poisoning, whereas Rh is less susceptible to phosphorus poisoning. Accordingly, Pd is suitable as a noble metal element contained in the lower layer 21, and Rh is suitable as a noble metal element contained in the upper layer 22.

Since the first catalyst layer 20 is provided on the upstream side of the second catalyst layer 30, the temperature of the exhaust gas that comes into contact with the first catalyst layer 20 is higher than that of the exhaust gas that comes into contact with the second catalyst layer 30. On the other hand, Pd exhibits higher heat resistance than Pt. Accordingly, Pd is more suitable than Pt as a noble metal element contained in the lower layer 21.

Since the content of La in terms of $La_2O_3$ in the first catalyst layer 20 is 5% by mass or more based on the mass of the first catalyst layer 20, a noble metal element in the first catalyst layer 20 is susceptible to oxidation by La in the first catalyst layer 20. On the other hand, oxidation of Pt reduces its exhaust gas purification performance, whereas oxidation of Pd improves its exhaust gas purification performance. Accordingly, Pd is more suitable than Pt as a noble metal element contained in the lower layer 21.

Pd is contained in the lower layer 21 in the form capable of functioning as a catalytically-active component, for example, in the form of a catalytically-active component containing Pd, such as metal Pd, an alloy containing Pd, a compound containing Pd (e.g., an oxide of Pd), or the like. From the viewpoint of improving the exhaust gas purification performance, the catalytically-active component containing Pd is preferably in particulate form.

From the viewpoint of effectively exhibiting the exhaust gas purification performance of Pd, the content of Pd in terms of metal in the lower layer 21 is preferably 0.1% by mass or more, more preferably 0.5% by mass or more, and still more preferably 1% by mass or more, based on the mass of the lower layer 21. The upper limit can be appropriately adjusted in consideration of the balance between the exhaust gas purification performance and the cost, and the like. The upper limit is preferably 20% by mass or less, more preferably 15% by mass or less, and still more preferably 10% by mass or less. Each of these upper limits may be combined with any of the above-described lower limits.

The lower layer 21 may contain one or more noble metal elements other than Pd.

The noble metal element other than Pd can be selected, for example, from Rh, Pt, Ru, Ir, Os, and the like. The noble metal element other than Pd is contained in the lower layer 21 in the form capable of functioning as a catalytically-active component, for example, in the form of a catalytically-active component containing the noble metal element other than Pd, such as metal, an alloy containing the noble metal element, a compound containing the noble metal element (e.g., an oxide of the noble metal element), or the like. From the viewpoint of improving the exhaust gas purification performance, the catalytically-active component containing the noble metal element other than Pd is preferably in particulate form.

In the case where the lower layer 21 contains Pd and the noble metal element other than Pd, Pd and the noble metal element other than Pd may form an alloy, thereby reducing active sites of Pd responsible for the exhaust gas purification performance. Accordingly, in the case where the lower layer 21 contains Pd, it is preferable that the content of the noble metal element other than Pd in terms of metal in the lower layer 21 is small. Specifically, the content of the noble metal element other than Pd in terms of metal in the lower layer 21 is preferably 0.05% by mass or less, more preferably 0.01% by mass or less, based on the mass of the lower layer 21. The lower limit is 0% by mass. The expression "the content of the noble metal element other than Pd in terms of metal in the lower layer 21" refers to: in the case where the lower layer 21 contains a single noble metal element other than Pd, the content of the single noble metal element other than Pd in terms of metal; and in the case where the lower layer 21 contains multiple noble metal elements other than Pd, the total content of the multiple noble metal elements other than Pd in terms of metal.

It is preferable that the lower layer 21 contains one or more carriers, and that at least part of a catalytically-active component is supported on the one or more carriers.

The expression "at least part of a catalytically-active component is supported on a carrier" refers to a state in which at least part of the catalytically-active component is physically or chemically adsorbed or retained on the outer surface of the carrier and/or the inner surface of pores of the carrier. This definition is applied to all catalyst layers (e.g., the lower layer 21, the upper layer 22, the lower layer 31, the upper layer 32, and the like).

Whether at least part of a catalytically-active component in a catalyst layer is supported on a carrier can be confirmed using, for example, SEM-EDX or the like. Specifically, when an element mapping obtained by analyzing a cross section of the catalyst layer using SEM-EDX shows that at least part of a catalytically-active component and a carrier are present in the same region, it can be determined that at least part of the catalytically-active component is supported on the carrier.

The carrier can be selected, for example, from an inorganic oxide. The inorganic oxide is, for example, in particulate form. From the viewpoint of improving the supportability for a catalytically-active component, the inorganic oxide is preferably porous. The inorganic oxide may have oxygen storage capacity (OSC), or may not have oxygen storage capacity. The inorganic oxide used as a carrier is distinct from an inorganic oxide used as a binder (e.g., an inorganic oxide binder such as an alumina binder, a zirconia binder, a titania binder, a silica binder, or the like).

Examples of the inorganic oxide include an Al-based oxide, a Ce-based oxide, a Ce-Zr-based complex oxide, an oxide of a rare earth element other than Ce, zirconia ($ZrO_2$), silica ($SiO_2$), titania ($TiO_2$), zeolite (aluminosilicate), and an oxide based on MgO, ZnO, $SnO_2$, or the like.

From the viewpoint of improving the heat resistance and/or oxygen storage capacity of the lower layer 21, the carrier is selected preferably from an Al-based oxide, a Ce-based oxide, and a Ce-Zr-based complex oxide, and more preferably from an Al-based oxide and a Ce-Zr-based complex oxide. In one embodiment, the lower layer 21 contains an Al-based oxide and a Ce-Zr-based complex oxide as carriers.

The lower layer 21 preferably contains La. As a result, the heat resistance of the lower layer 21 is improved. In addition, phosphorus poisoning of a noble metal element in the lower layer 21 is suppressed. Further, due to oxidation of Pd by La, the exhaust gas purification performance of Pd in the lower layer 21 is improved. Furthermore, in the case where a Ce-Zr-based complex oxide in the lower layer 21 contains La, the heat resistance and oxygen storage capacity of the Ce-Zr-based complex oxide in the lower layer 21 are improved.

In the case where the lower layer 21 contains La, the lower layer 21 contains one or more La sources. The description regarding the La source is the same as that provided above.

From the viewpoint of improving the heat resistance and/or oxygen storage capacity of the lower layer 21, the La source is preferably selected from an Al-based oxide containing La and a Ce-Zr-based complex oxide containing La. In one embodiment, the lower layer 21 contains, as La sources, an Al-based oxide containing La and a Ce-Zr-based complex oxide containing La. An Al-based oxide containing La contributes to improving the heat resistance of the lower layer 21. A Ce-Zr-based complex oxide containing La contributes to improving the heat resistance and oxygen storage capacity of the lower layer 21.

From the viewpoint of effectively exhibiting the action of La, the content of La in terms of $La_2O_3$ in the lower layer 21 is preferably 5% by mass or more, more preferably 6% by mass or more, and still more preferably 7% by mass or more, based on the mass of the lower layer 21. The upper limit can be appropriately adjusted in consideration of the balance between the exhaust gas purification performance and the cost, the content of other components, and the like. The upper limit is preferably 20% by mass or less, more preferably 15% by mass or less, and still more preferably 10% by mass or less. Each of these upper limits may be combined with any of the above-described lower limits.

The proportion of the mass of La in terms of $La_2O_3$ derived from an Al-based oxide containing La and a Ce-Zr-based complex oxide containing La to the mass of La in terms of $La_2O_3$ in the lower layer 21 is preferably 70% by mass or more, more preferably 80% by mass or more, and still more preferably 90% by mass or more. The upper limit is 100% by mass.

From the viewpoint of improving the heat resistance of the lower layer 21, the lower layer 21 preferably contains Al.

In the case where the lower layer 21 contains Al, the lower layer 21 contains one or more Al sources. The Al source is an oxide containing Al. The Al source can be selected, for example, from an Al-based oxide, a Ce-based oxide containing Al, a Ce-Zr-based complex oxide containing Al, an alumina binder, and the like. In one embodiment, the lower layer 21 contains, as Al sources, an Al-based oxide and an alumina binder.

From the viewpoint of improving the heat resistance of the lower layer 21, the content of Al in terms of $Al_2O_3$ in the lower layer 21 is preferably 30% by mass or more, more preferably 40% by mass or more, and still more preferably 50% by mass or more, based on the mass of the lower layer 21. The upper limit can be appropriately adjusted in consideration of the balance between the exhaust gas purification performance and the cost, the content of other components, and the like. The upper limit is preferably 90% by mass or less, more preferably 80% by mass or less, and still more preferably 70% by mass or less. Each of these upper limits may be combined with any of the above-described lower limits.

With respect to a catalyst layer, the expression "the content of Al in terms of $Al_2O_3$ in the catalyst layer" refers to: in the case where the catalyst layer contains a single Al source, the content of Al in terms of $Al_2O_3$ derived from the single Al source; and in the case where the catalyst layer contains multiple Al sources, the total content of Al in terms of $Al_2O_3$ derived from the multiple Al sources. This definition is applied to all catalyst layers (e.g., the lower layer 21, the upper layer 22, the lower layer 31, the upper layer 32, and the like).

From the viewpoint of improving the oxygen storage capacity of the lower layer 21, the lower layer 21 preferably contains Ce.

In the case where the lower layer 21 contains Ce, the lower layer 21 contains one or more Ce sources. The Ce source is an oxide containing Ce. The Ce source can be selected, for example, from an Al-based oxide containing Ce, a Ce-based oxide, a Ce-Zr-based complex oxide, a ceria binder, and the like. In one embodiment, the lower layer 21 contains a Ce-Zr-based complex oxide as a Ce source.

From the viewpoint of improving the heat resistance and oxygen storage capacity of the lower layer 21, the lower layer 21 preferably contains Zr.

In the case where the lower layer 21 contains Zr, the lower layer 21 contains one or more Zr sources. The description regarding the Zr source is the same as that provided above. In one embodiment, the lower layer 21 contains a Ce-Zr-based complex oxide as a Zr source.

From the viewpoint of improving the heat resistance and oxygen storage capacity of the lower layer 21, the content of Zr in terms of $ZrO_2$ in the lower layer 21 is preferably 10% by mass or more, more preferably 30% by mass or more, and still more preferably 40% by mass or more, based on the mass of the lower layer 21. The upper limit can be appropriately adjusted in consideration of the balance between the exhaust gas purification performance and the cost, the content of other components, and the like. The upper limit is preferably 95% by mass or less, more preferably 90% by mass or less, and still more preferably 85% by mass or less. Each of these upper limits may be combined with any of the above-described lower limits.

With respect to a catalyst layer, the expression "the content of Zr in terms of $ZrO_2$ in the catalyst layer" refers to: in the case where the catalyst layer contains a single Zr source, the content of Zr in terms of $ZrO_2$ derived from the single Zr source; and in the case where the catalyst layer contains multiple Zr sources, the total content of Zr in terms of $ZrO_2$ derived from the multiple Zr sources. This definition is applied to all catalyst layers (e.g., the lower layer 21, the upper layer 22, the lower layer 31, the upper layer 32, and the like).

The lower layer 21 may contain components such as a binder and a stabilizer. Examples of the binder include inorganic oxide binders such as alumina sol, ceria sol, zirconia sol, titania sol, and silica sol. Examples of the stabilizer include a carbonate, an oxide, or a sulfate of an alkaline earth metal element (e.g., Sr, Ba, or the like).

< Upper layer of first catalyst layer >

Hereinafter, the upper layer 22 of the first catalyst layer 20 will be described.

As shown in Figures 4 and 6, the upper layer 22 is provided on the upside of the lower layer 21.

The expression that "the upper layer 22 is provided on the upside of the lower layer 21" means that part or the whole of the upper layer 22 is present on, of two main surfaces of the lower layer 21, the main surface opposite to the main surface on the partition wall 12 side. The expression "the main surface of the lower layer 21" refers to an outer surface of the lower layer 21, the outer surface extending in the exhaust gas flow direction X. The upper layer 22 may be provided directly or via another layer on the main surface of the lower layer 21. Usually, the upper layer 22 is provided directly on the main surface of the lower layer 21. The upper layer 22 may be provided so as to cover part or the whole of the main surface of the lower layer 21. The expression "the upper layer 22 is provided on the upside of the lower layer 21" encompasses an embodiment wherein the upper layer 22 is provided directly on the main surface of the lower layer 21, and an embodiment wherein the upper layer 22 is provided via another layer on the main surface of the lower layer 21.

As shown in Figure 6, the upper layer 22 extends from the end on the exhaust gas inflow side of the partition wall 12 along the exhaust gas flow direction X so as not to reach the end on the exhaust gas outflow side of the partition wall 12.

From the viewpoint of balancing the exhaust gas purification performance and the cost, the mass (mass after calcining) of the upper layer 22 per unit volume of the portion of the substrate 10 provided with the upper layer 22 is preferably 20 g/L or more and 150 g/L or less, more preferably 50 g/L or more and 120 g/L or less, and still more preferably 70 g/L or more and 100 g/L or less.

The mass of the upper layer 22 per unit volume of the portion of the substrate 10 provided with the upper layer 22 is calculated from the formula:

(the mass of the upper layer 22) / ((the volume of the substrate 10) $\times$ (the average length $L_{22}$ of the upper layer 22 / the length $L_{10}$ of the substrate 10)).

The above description regarding the average length $L_{20}$ of the first catalyst layer 20 is also applied to the average length $L_{22}$ of the upper layer 22. Upon application, the "first catalyst layer 20" and the "average length $L_{20}$" are replaced with the "upper layer 22" and the "average length $L_{22}$", respectively.

The upper layer 22 contains Rh.

Rh is contained in the upper layer 22 in the form capable of functioning as a catalytically-active component, for example, in the form of a catalytically-active component containing Rh, such as metal Rh, an alloy containing Rh, a compound containing Rh (e.g., an oxide of Rh), or the like. From the viewpoint of improving the exhaust gas purification performance, the catalytically-active component containing Rh is preferably in particulate form.

From the viewpoint of effectively exhibiting the exhaust gas purification performance of Rh, the content of Rh in terms of metal in the upper layer 22 is preferably 0.01% by mass or more, more preferably 0.05% by mass or more, and still more preferably 0.1% by mass or more, based on the mass of the upper layer 22. The upper limit can be appropriately adjusted in consideration of the balance between the exhaust gas purification performance and the cost, and the like. The upper limit is preferably 5% by mass or less, more preferably 3% by mass or less, and still more preferably 2% by mass or less. Each of these upper limits may be combined with any of the above-described lower limits.

The upper layer 22 may contain one or more noble metal elements other than Rh, in addition to Rh.

The noble metal element other than Rh can be selected, for example, from Pd, Pt, Ru, Ir, Os, and the like. The noble metal element other than Rh is contained in the upper layer 22 in the form capable of functioning as a catalytically-active component, for example, in the form of a catalytically-active component containing the noble metal element other than Rh, such as metal, an alloy containing the noble metal element, a compound containing the noble metal element (e.g., an oxide of the noble metal element), or the like. From the viewpoint of improving the exhaust gas purification performance, the catalytically-active component containing the noble metal element other than Rh is preferably in particulate form.

In the case where the upper layer 22 contains Rh and the noble metal element other than Rh, Rh and the noble metal element other than Rh may form an alloy, thereby reducing active sites of Rh responsible for the exhaust gas purification performance. Accordingly, it is preferable that the content of the noble metal element other than Rh in terms of metal in the upper layer 22 is small. Specifically, the content of the noble metal element other than Rh in terms of metal in the upper layer 22 is preferably 0.05% by mass or less, and more preferably 0.01% by mass or less, based on the mass of the upper layer 22. The lower limit is 0% by mass. The expression "the content of the noble metal element other than Rh in terms of metal in the upper layer 22" refers to: in the case where the upper layer 22 contains a single noble metal element other than Rh, the content of the single noble metal element other than Rh in terms of metal; and in the case where the upper layer 22 contains multiple noble metal elements other than Rh, the total content of the multiple noble metal elements other than Rh in terms of metal.

It is preferable that the upper layer 22 contains one or more carriers, and that at least part of a catalytically-active component is supported on the one or more carriers.

The carrier can be selected, for example, from an inorganic oxide. The description regarding the inorganic oxide is the same as that provided above.

From the viewpoint of improving the heat resistance and/or oxygen storage capacity of the upper layer 22, the carrier is selected preferably from an Al-based oxide, a Ce-based oxide, and a Ce-Zr-based complex oxide, and more preferably from an Al-based oxide and a Ce-Zr-based complex oxide. In one embodiment, the upper layer 22 contains an Al-based oxide and a Ce-Zr-based complex oxide as carriers.

The upper layer 22 preferably contains La. As a result, the heat resistance of the upper layer 22 is improved. In addition, phosphorus poisoning of a noble metal element in the upper layer 22 is suppressed. Further, in the case where a Ce-Zr-based complex oxide in the upper layer 22 contains La, the heat resistance and oxygen storage capacity of the Ce-Zr-based complex oxide in the upper layer 22 are improved.

In the case where the upper layer 22 contains La, the upper layer 22 contains one or more La sources. The description regarding the La source is the same as that provided above.

From the viewpoint of improving the heat resistance and/or oxygen storage capacity of the upper layer 22, the La source is preferably selected from an Al-based oxide containing La and a Ce-Zr-based complex oxide containing La. In one embodiment, the upper layer 22 contains, as La sources, an Al-based oxide containing La and a Ce-Zr-based complex oxide containing La. An Al-based oxide containing La contributes to improving the heat resistance of the upper layer 22. A Ce-Zr-based complex oxide containing La contributes to improving the heat resistance and oxygen storage capacity of the upper layer 22.

From the viewpoint of effectively exhibiting the action of La, the content of La in terms of $La_2O_3$ in the upper layer 22 is preferably 5% by mass or more, more preferably 6% by mass or more, and still more preferably 7% by mass or more, based on the mass of the upper layer 22. The upper limit can be appropriately adjusted in consideration of the balance between the exhaust gas purification performance and the cost, the content of other components, and the like. The upper limit is preferably 20% by mass or less, more preferably 15% by mass or less, and still more preferably 10% by mass or less. Each of these upper limits may be combined with any of the above-described lower limits.

The proportion of the mass of La in terms of $La_2O_3$ derived from an Al-based oxide containing La and a Ce-Zr-based complex oxide containing La to the mass of La in terms of $La_2O_3$ in the upper layer 22 is preferably 70% by mass or more, more preferably 80% by mass or more, and still more preferably 90% by mass or more. The upper limit is 100% by mass.

From the viewpoint of improving the heat resistance of the upper layer 22, the upper layer 22 preferably contains

In the case where the upper layer 22 contains Al, the upper layer 22 contains one or more Al sources. The description regarding the Al source is the same as that provided above. In one embodiment, the upper layer 22 contains, as Al sources, an Al-based oxide and an alumina binder.

From the viewpoint of improving the heat resistance of the upper layer 22, the content of Al in terms of $Al_2O_3$ in the upper layer 22 is preferably 20% by mass or more, more preferably 30% by mass or more, and still more preferably 40% by mass or more, based on the mass of the upper layer 22. The upper limit can be appropriately adjusted in consideration of the balance between the exhaust gas purification performance and the cost, the content of other components, and the like. The upper limit is preferably 90% by mass or less, more preferably 80% by mass or less, and still more preferably 70% by mass or less. Each of these upper limits may be combined with any of the above-described lower limits.

From the viewpoint of improving the oxygen storage capacity of the upper layer 22, the upper layer 22 preferably contains Ce.

In the case where the upper layer 22 contains Ce, the upper layer 22 contains one or more Ce sources. The description regarding the Ce source is the same as that provided above. In one embodiment, the upper layer 22 contains a Ce-Zr-based complex oxide as a Ce source.

From the viewpoint of improving the heat resistance and oxygen storage capacity of the upper layer 22, the upper layer 22 preferably contains Zr.

In the case where the upper layer 22 contains Zr, the upper layer 22 contains one or more Zr sources. The description regarding the Zr source is the same as that provided above. In one embodiment, the upper layer 22 contains a Ce-Zr-based complex oxide as a Zr source.

From the viewpoint of improving the heat resistance and oxygen storage capacity of the upper layer 22, the content of Zr in terms of $ZrO_2$ in the upper layer 22 is preferably 10% by mass or more, more preferably 15% by mass or more, and still more preferably 20% by mass or more, based on the mass of the upper layer 22. The upper limit can be appropriately adjusted in consideration of the balance between the exhaust gas purification performance and the cost, the content of other components, and the like. The upper limit is preferably 95% by mass or less, more preferably 90% by mass or less, and still more preferably 85% by mass or less. Each of these upper limits may be combined with any of the above-described lower limits.

The upper layer 22 may contain components such as a binder and a stabilizer. The description regarding the binder and the stabilizer is the same as that provided above.

< Second catalyst layer >

Hereinafter, the second catalyst layer 30 will be described.

As shown in Figures 5 and 6, the second catalyst layer 30 is provided in a downstream region of the surface on the cell 13 side of the partition wall 12. The meaning of the expression "the surface on the cell 13 side of the partition wall 12" is the same as that provided above. The term "downstream region" refers to a region that extends from the end on the exhaust gas outflow side of the partition wall 12 along the direction opposite to the exhaust gas flow direction X so as not to reach the end on the exhaust gas inflow side of the partition wall 12. The second catalyst layer 30 may be provided directly or via another layer on the surface on the cell 13 side of the partition wall 12. Usually, the second catalyst layer 30 is provided directly on the surface on the cell 13 side of the partition wall 12.

As shown in Figure 6, the second catalyst layer 30 extends from the end on the exhaust gas outflow side of the partition wall 12 along the direction opposite to the exhaust gas flow direction X so as not to reach the end on the exhaust gas inflow side of the partition wall 12.

As shown in Figure 6, the second catalyst layer 30 is provided on the downstream side of the first catalyst layer 20. The expression "the second catalyst layer 30 is provided on the downstream side of the first catalyst layer 20" means that at least part of the second catalyst layer 30 is present in a region of the surface on the cell 13 side of the partition wall 12, the region being located downstream in the exhaust gas flow direction X from the region where the first catalyst layer 20 is provided.

As shown in Figure 6, the end on the exhaust gas inflow side of the second catalyst layer 30 is in contact with the end on the exhaust gas outflow side of the first catalyst layer 20 at a boundary plane S. However, the end on the exhaust gas inflow side of the second catalyst layer 30 may have a portion that overlaps with the end on the exhaust gas outflow side of the first catalyst layer 20 (i.e., a portion that is located on the upside of the end on the exhaust gas outflow side of the first catalyst layer 20 and covers the end on the exhaust gas outflow side of the first catalyst layer 20). Alternatively, the end on the exhaust gas outflow side of the first catalyst layer 20 may have a portion that overlaps with the end on the exhaust gas inflow side of the second catalyst layer 30 (i.e., a portion that is located on the upside of the end on the exhaust gas inflow side of the second catalyst layer 30 and covers the end on the exhaust gas inflow side of the second catalyst layer 30). These cases are also included in the expression "the second catalyst layer 30 is provided on the downstream side of the first catalyst layer 20".

The end on the exhaust gas inflow side of the lower layer 31 of the second catalyst layer 30 may have a portion that overlaps with the end on the exhaust gas outflow side of the lower layer 21 of the first catalyst layer 20 (i.e. a portion that is located on the upside of the end on the exhaust gas outflow side of the lower layer 21 of the first catalyst layer 20 and covers the end on the exhaust gas outflow side of the lower layer 21 of the first catalyst layer 20). Alternatively, the end on the exhaust gas outflow side of the lower layer 21 of the first catalyst layer 20 may have a portion that overlaps with the end on the exhaust gas inflow side of the lower layer 31 of the second catalyst layer 30 (i.e., a portion that is located on the upside of the end on the exhaust gas inflow side of the lower layer 31 of the second catalyst layer 30 and covers the end on the exhaust gas inflow side of the lower layer 31 of the second catalyst layer 30). These cases are also included in the expression that "the second catalyst layer 30 is provided on the downstream side of the first catalyst layer 20".

The end on the exhaust gas inflow side of the upper layer 32 of the second catalyst layer 30 may have a portion that overlaps with the end on the exhaust gas outflow side of the upper layer 22 of the first catalyst layer 20 (i.e., a portion that is located on the upside of the end on the exhaust gas outflow side of the upper layer 22 of the first catalyst layer 20 and covers the end on the exhaust gas outflow side of the upper layer 22 of the first catalyst layer 20). Alternatively, the end on the exhaust gas outflow side of the upper layer 22 of the first catalyst layer 20 may have a portion that overlaps with the end on the exhaust gas inflow side of the upper layer 32 of the second catalyst layer 30 (i.e., a portion that is located on the upside of the end on the exhaust gas inflow side of the upper layer 32 of the second catalyst layer 30 and covers the end on the exhaust gas inflow side of the upper layer 32 of the second catalyst layer 30). These cases are also encompassed by the expression "the second catalyst layer 30 is provided on the downstream side of the first catalyst layer 20."

From the viewpoint of balancing exhaust gas purification performance and cost, the mass (mass after calcining) of the second catalyst layer 30 per unit volume of the portion of the substrate 10 provided with the second catalyst layer 30 is preferably 70 g/L or more and 380 g/L or less, more preferably 150 g/L or more and 300 g/L or less, and still more preferably 200 g/L or more and 260 g/L or less.

The mass of the second catalyst layer 30 per unit volume of the portion of the substrate 10 provided with the second catalyst layer 30 is calculated from the formula: (the mass of the second catalyst layer 30) / ((the volume of the substrate 10) $\times$ (the average length $L_{30}$ of the second catalyst layer 30 / the length $L_{10}$ of the substrate 10)).

The above description regarding the method of measuring the average length $L_{20}$ of the first catalyst layer 20 is also applied to the method of measuring the average length $L_{30}$ of the second catalyst layer 30. Upon application, the "first catalyst layer 20" and the "average length $L_{20}$" are replaced with the "second catalyst layer 30" and the "average length $L_{30}$", respectively. However, in the method of measuring the average length $L_{30}$ of the second catalyst layer 30, the sample is cut at 5 mm intervals along planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length $L_{30}$ of the second catalyst layer 30 can be appropriately adjusted in consideration of the balance between the exhaust gas purification performance and the cost, the average length $L_{20}$ of the first catalyst layer 20, and the like.

The second catalyst layer 30 may contain La, or may not contain La. In the case where the second catalyst layer 30 contains La, the heat resistance of the second catalyst layer 30 is improved. In the case where a Ce-Zr-based complex oxide in the second catalyst layer 30 contains La, the heat resistance and oxygen storage capacity of the Ce-Zr-based complex oxide in the second catalyst layer 30 are improved.

In one embodiment where the second catalyst layer 30 contains La, one of the lower layers 31 and the upper layer 32 contains La, and the other does not contain La. In another embodiment where the second catalyst layer 30 contains La, both the lower layer 31 and the upper layer 32 contain La. From the viewpoint of effectively exhibiting the action of La, both the lower layer 31 and the upper layer 32 preferably contain La.

In the case where the second catalyst layer 30 contains La, the second catalyst layer 30 contains one or more La sources. The description regarding the La source is the same as that provided above.

From the viewpoint of improving the heat resistance and/or oxygen storage capacity of the second catalyst layer 30, the La source is preferably selected from an Al-based oxide containing La and a Ce-Zr-based complex oxide containing La. In one embodiment, the second catalyst layer 30 contains, as La sources, an Al-based oxide containing La and a Ce-Zr-based complex oxide containing La. An Al-based oxide containing La contributes to improving the heat resistance of the second catalyst layer 30. A Ce-Zr-based complex oxide containing La contributes to improving the heat resistance and oxygen storage capacity of the second catalyst layer 30.

From the viewpoint of suppressing a decrease in the exhaust gas purification performance of a noble metal element (particularly Rh) in the second catalyst layer 30 caused by La in the second catalyst layer 30, the content of La in terms of $La_2O_3$ in the second catalyst layer 30 is preferably 2.7% by mass or less, and more preferably 2.5% by mass or less, based on the mass of the second catalyst layer 30. The lower limit may be 0% by mass, or may be more than 0% by mass. In the case where the second catalyst layer 30 contains La, from the viewpoint of effectively exhibiting the action of La, the lower limit is preferably 0.01% by mass or more, more preferably 0.05% by mass or more, and still more preferably 0.1 % by mass or more. Each of these lower limits may be combined with any of the above-described upper limits.

The proportion of the mass of La in terms of $La_2O_3$ derived from an Al-based oxide containing La and a Ce-Zr-based complex oxide containing La to the mass of La in terms of $La_2O_3$ in the second catalyst layer 30 is preferably 70% by mass or more, more preferably 80% by mass or more, and still more preferably 90% by mass or more. The upper limit is 100% by mass.

< Lower layer of second catalyst layer >

Hereinafter, the lower layer 31 of the second catalyst layer 30 will be described.

As shown in Figures 5 and 6, the lower layer 31 is provided in a downstream region of the surface on the cell 13 side of the partition wall 12. The meanings of the expression "the surface on the cell 13 side of the partition wall 12" and the term "downstream region" are as described above. The lower layer 31 may be provided directly or via another layer on the surface on the cell 13 side of the partition wall 12. Usually, the lower layer 31 is provided directly on the surface on the cell 13 side of the partition wall 12.

The lower layer 31 may be composed of a structure rising from the surface on the cell 13 side of the partition wall 12 toward the cell 13 side (hereinafter referred to as "rising structure"), or may be composed of a structure present inside the partition wall 12 (hereinafter referred to as "internal structure"), or may have both the rising structure and the internal structure. The present invention encompasses an embodiment wherein the lower layer 31 is composed of the rising structure, an embodiment wherein the lower layer 31 is composed of the internal structure, and an embodiment wherein the lower layer 31 has both the rising structure and the internal structure.

As shown in Figures 5 and 6, the lower layer 31 preferably has the rising structure. As a result, the contactability between the lower layer 31 and the exhaust gas is improved, thereby improving the exhaust gas purification performance.

As shown in Figure 6, the lower layer 31 extends from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcining) of the lower layer 31 per unit volume of the portion of the substrate 10 provided with the lower layer 31 is preferably 50 g/L or more and 230 g/L or less, more preferably 100 g/L or more and 180 g/L or less, and still more preferably 130 g/L or more and 160 g/L or less.

The mass of the lower layer 31 per unit volume of the portion of the substrate 10 provided with the lower layer 31 is calculated from the formula:

(the mass of the lower layer 31) / ((the volume of the substrate 10) $\times$ (the average length $L_{31}$ of the lower layer 31 / the length $L_{10}$ of the substrate 10)).

The above description regarding the average length $L_{30}$ of the second catalyst layer 30 is also applied to the average length $L_{31}$ of the lower layer 31. Upon application, the "second catalyst layer 30" and the "average length $L_{30}$" are replaced with the "lower layer 31" and the "average length $L_{31}$", respectively.

The lower layer 31 contains Pt. Since Pt is less expensive than Rh and Pd, Pt is used from the viewpoint of cost reduction.

Since the lower layer 31 is covered by the upper layer 32, the exhaust gas that comes into contact with the lower layer 31 is in a more stable atmosphere than the exhaust gas that comes into contact with the upper layer 32. More specifically, the exhaust gas that comes into contact with the lower layer 31 is less likely to momentarily be in an atmosphere that is rich in oxygen or reducing substances (CO/HC). Rh exhibits excellent purification performance in an environment with large fluctuations in atmosphere, whereas Pt exhibits excellent purification performance in an environment with a stable atmosphere. Accordingly, Pt is suitable as a noble metal element contained in the lower layer 31, and Rh is suitable as a noble metal element contained in the upper layer 32.

Since the second catalyst layer 30 is provided on the downstream side of the first catalyst layer 20, the temperature of the exhaust gas that comes into contact with the second catalyst layer 30 is lower than that of the exhaust gas that comes into contact with the first catalyst layer 20. On the other hand, Pt exhibits lower heat resistance than Pd. Accordingly, Pt is more suitable than Pd as a noble metal element contained in the lower layer 31.

Since the content of La in terms of $La_2O_3$ in the second catalyst layer 30 is 3% by mass or less based on the mass of the second catalyst layer 30, a noble metal element in the second catalyst layer 30 is less susceptible to oxidation by La in the second catalyst layer 30. On the other hand, oxidation of Pd improves its exhaust gas purification performance, whereas oxidation of Pt reduces its exhaust gas purification performance. Accordingly, Pt is more suitable than Pd as a noble metal element contained in the lower layer 31.

Pt is contained in the lower layer 31 in the form capable of functioning as a catalytically-active component, for example, in the form of a catalytically-active component containing Pt, such as metal Pt, an alloy containing Pt, a compound containing Pt (e.g., an oxide of Pt), or the like. From the viewpoint of improving the exhaust gas purification performance, the catalytically-active component containing Pt is preferably in particulate form.

From the viewpoint of effectively exhibiting the exhaust gas purification performance of Pt, the content of Pt in terms of metal in the lower layer 31 is preferably 0.05% by mass or more, more preferably 0.1% by mass or more, and still more preferably 0.3% by mass or more, based on the mass of the lower layer 31. The upper limit can be appropriately adjusted in consideration of the balance between the exhaust gas purification performance and the cost, and the like. The upper limit is preferably 5% by mass or less, more preferably 3% by mass or less, and still more preferably 1% by mass or less. Each of these upper limits may be combined with any of the above-described lower limits.

The lower layer 31 may contain one or more noble metal elements other than Pt.

The noble metal element other than Pt can be selected, for example, from Rh, Pd, Ru, Ir, Os, and the like. The noble metal element other than Pt is contained in the lower layer 31 in the form capable of functioning as a catalytically-active component, for example, in the form of a catalytically-active component containing the noble metal element other than Pt, such as metal, an alloy containing the noble metal element, a compound containing the noble metal element (e.g., an oxide of the noble metal element), or the like. From the viewpoint of improving the exhaust gas purification performance, the catalytically-active component containing the noble metal element other than Pt is preferably in particulate form.

In the case where the lower layer 31 contains Pt and the noble metal element other than Pt, Pt and the noble metal element other than Pt may form an alloy, thereby reducing active sites of Pt responsible for the exhaust gas purification performance. Accordingly, in the case where the lower layer 31 contains Pt, it is preferable that the content of the noble metal element other than Pt in terms of metal in the lower layer 31 is small. Specifically, the content of the noble metal element other than Pt in terms of metal in the lower layer 31 is preferably 1% by mass or less, more preferably 0.3% by mass or less, and still more preferably 0.05% by mass or less, based on the mass of the lower layer 31. The lower limit is 0% by mass. The expression "the content of the noble metal element other than Pt in terms of metal in the lower layer 31" refers to: in the case where the lower layer 31 contains a single noble metal element other than Pt, the content of the single noble metal element other than Pt in terms of metal; and in the case where the lower layer 31 contains multiple noble metal elements other than Pt, the total content of the multiple noble metal elements other than Pt in terms of metal.

It is preferable that the lower layer 31 contains one or more carriers, and that at least part of a catalytically-active component is supported on the one or more carriers.

The carrier can be selected, for example, from an inorganic oxide. The description regarding the inorganic oxide is the same as that provided above.

From the viewpoint of improving the heat resistance and/or oxygen storage capacity of the lower layer 31, the carrier be selected preferably from an Al-based oxide, a Ce-based oxide, and a Ce-Zr-based complex oxide, and more preferably from an Al-based oxide and a Ce-Zr-based complex oxide. In one embodiment, the lower layer 31 contains an Al-based oxide and a Ce-Zr-based complex oxide as carriers.

The lower layer 31 may contain La, or may not contain La. In the case where the lower layer 31 contains La, the heat resistance of the lower layer 31 is improved. Moreover, in the case where a Ce-Zr-based complex oxide in the lower layer 31 contains La, the heat resistance and oxygen storage capacity of the Ce-Zr-based complex oxide in the lower layer 31 are improved.

In the case where the lower layer 31 contains La, the lower layer 31 contains one or more La sources. The description regarding the La source is the same as that provided above.

From the viewpoint of improving the heat resistance and/or oxygen storage capacity of the lower layer 31, the La source is preferably selected from an Al-based oxide containing La and a Ce-Zr-based complex oxide containing La. In one embodiment, the lower layer 31 contains, as La sources, an Al-based oxide containing La and a Ce-Zr-based complex oxide containing La.

From the viewpoint of suppressing a decrease in the exhaust gas purification performance of a noble metal element (particularly Pt) in the lower layer 31 caused by La in the lower layer 31, the content of La in terms of $La_2O_3$ in the lower layer 31 is preferably 2% by mass or less, more preferably 1.9% by mass or less, and still more preferably 1.8% by mass or less, based on the mass of the lower layer 31. The lower limit may be 0% by mass, or may be more than 0% by mass. In the case where the lower layer 31 contains La, from the viewpoint of effectively exhibiting the action of La, the lower limit is preferably 0.01% by mass or more, more preferably 0.03% by mass or more, and still more preferably 0.05% by mass or more. Each of these lower limits may be combined with any of the above-described upper limits.

The proportion of the mass of La in terms of $La_2O_3$ derived from an Al-based oxide containing La and a Ce-Zr-based complex oxide containing La to the mass of La in terms of $La_2O_3$ in the lower layer 31 is preferably 70% by mass or more, more preferably 80% by mass or more, and still more preferably 90% by mass or more. The upper limit is 100% by mass.

When the content of the noble metal element other than Pt in terms of metal in the lower layer 31 is small, the content of Pt in terms of metal in the lower layer 31 becomes relatively large, and the influence of Pt on the exhaust gas purification performance of the lower layer 31 becomes significant. In this case, oxidation of Pt in the lower layer 31 by La in the lower layer 31 results in a decrease in the exhaust gas purification performance of Pt in the lower layer 31, which causes a significant decrease in the exhaust gas purification performance of the lower layer 31. Accordingly, when the content of the noble metal element other than Pt in terms of metal in the lower layer 31 is small, it is preferable that the content of La in terms of $La_2O_3$ in the lower layer 31 is small. This makes it possible to effectively suppress a decrease in the exhaust gas purification performance of the lower layer 31. Specifically, from the viewpoint of effectively suppressing a decrease in exhaust gas purification performance of the lower layer 31, it is preferable to combine the above-described embodiment wherein the content of the noble metal element other than Pt in terms of metal in the lower layer 31 is preferably 1% by mass or less, more preferably 0.3% by mass or less, and still more preferably 0.05% by mass or less, based on the mass of the lower layer 31, with the above-described embodiment wherein the content of La in terms of $La_2O_3$ in the lower layer 31 is preferably 2% by mass or less, more preferably 1.9% by mass or less, and still more preferably 1.8% by mass or less, based on the mass of the lower layer 31. The description regarding the former and latter embodiments is as described above.

From the viewpoint of improving the heat resistance of the lower layer 31, the lower layer 31 preferably contains

In the case where the lower layer 31 contains Al, the lower layer 31 contains one or more Al sources. The description regarding the Al source is the same as that provided above. In one embodiment, the lower layer 31 contains, as Al sources, an Al-based oxide and an alumina binder.

From the viewpoint of improving the heat resistance of the lower layer 31, the content of Al in terms of $Al_2O_3$ in the lower layer 31 is preferably 20% by mass or more, more preferably 30% by mass or more, and still more preferably 40% by mass or more, based on the mass of the lower layer 31. The upper limit can be appropriately adjusted in consideration of the balance between the exhaust gas purification performance and the cost, the content of other components, and the like. The upper limit is preferably 90% by mass or less, more preferably 80% by mass or less, and still more preferably 70% by mass or less. Each of these upper limits may be combined with any of the above-described lower limits.

From the viewpoint of improving the oxygen storage capacity of the lower layer 31, the lower layer 31 preferably contains Ce.

In the case where the lower layer 31 contains Ce, the lower layer 31 contains one or more Ce sources. The description regarding the Ce source is the same as that provided above. In one embodiment, the lower layer 31 contains a Ce-Zr-based complex oxide as a Ce source.

From the viewpoint of improving the heat resistance and oxygen storage capacity of the lower layer 31, the lower layer 31 preferably contains Zr.

In the case where the lower layer 31 contains Zr, the lower layer 31 contains one or more Zr sources. The description regarding the Zr source is the same as that provided above. In one embodiment, the lower layer 31 contains a Ce-Zr-based complex oxide as a Zr source.

From the viewpoint of improving the heat resistance and oxygen storage capacity of the lower layer 31, the content of Zr in terms of $ZrO_2$ in the lower layer 31 is preferably 10% by mass or more, more preferably 30% by mass or more, and still more preferably 40% by mass or more, based on the mass of the lower layer 31. The upper limit can be appropriately adjusted in consideration of the balance between the exhaust gas purification performance and the cost, the content of other components, and the like. The upper limit is preferably 95% by mass or less, more preferably 90% by mass or less, and still more preferably 85% by mass or less. Each of these upper limits may be combined with any of the above-described lower limits.

**The** lower layer 31 may contain components such as a binder and a stabilizer. **The** description regarding the binder and the stabilizer is the same as that provided above.

< Upper layer of second catalyst layer >

Hereinafter, the upper layer 32 of the second catalyst layer 30 will be described.

As shown in Figures 5 and 6, the upper layer 32 is provided on the upside of the lower layer 31.

**The** expression "the upper layer 32 is provided on the upside of the lower layer 31" means that part or the whole of the upper layer 32 is present on, of two main surfaces of the lower layer 31, the main surface opposite to the main surface on the partition wall 12 side. **The** expression "the main surface of the lower layer 31" refers to an outer surface of the lower layer 31, the outer surface extending in the exhaust gas flow direction X. **The** upper layer 32 may be provided directly or via another layer on the main surface of the lower layer 31. Usually, the upper layer 32 is provided directly on the main surface of the lower layer 31. **The** upper layer 32 may be provided so as to cover part or the whole of the main surface of the lower layer 31. **The** expression "the upper layer 32 is provided on the upside of the lower layer 31" encompasses an embodiment wherein the upper layer 32 is provided directly on the main surface of the lower layer 31, and an embodiment wherein the upper layer 32 is provided via another layer on the main surface of the lower layer 31.

As shown in Figure 6, the upper layer 32 extends from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcining) of the upper layer 32 per unit volume of the portion of the substrate 10 provided with the upper layer 32 is preferably 20 g/L or more and 150 g/L or less, more preferably 50 g/L or more and 120 g/L or less, and still more preferably 70 g/L or more and 100 g/L or less.

The mass of the upper layer 32 per unit volume of the portion of the substrate 10 provided with the upper layer 32 is calculated from the formula:

(the mass of the upper layer 32) / ((the volume of the substrate 10) $\times$ (the average length $L_{32}$ of the upper layer 32 / the length $L_{10}$ of the substrate 10)).

The above description regarding the average length $L_{30}$ of the second catalyst layer 30 is also applied to the average length $L_{32}$ of the upper layer 32. Upon application, the "second catalyst layer 30" and the "average length $L_{30}$" are replaced with the "upper layer 32" and the "average length $L_{32}$", respectively.

The upper layer 32 contains Rh.

Rh is contained in the upper layer 32 in the form capable of functioning as a catalytically-active component, for example, in the form of a catalytically-active component containing Rh, such as metal Rh, an alloy containing Rh, a compound containing Rh (e.g., an oxide of Rh), or the like. From the viewpoint of improving the exhaust gas purification performance, the catalytically-active component containing Rh is preferably in particulate form.

From the viewpoint of effectively exhibiting the exhaust gas purification performance of Rh, the content of Rh in terms of metal in the upper layer 32 is preferably 0.01% by mass or more, more preferably 0.05% by mass or more, and still more preferably 0.1% by mass or more, based on the mass of the upper layer 32. The upper limit can be appropriately adjusted in consideration of the balance between the exhaust gas purification performance and the cost, and the like. The upper limit is preferably 1% by mass or less, more preferably 0.5% by mass or less, and still more preferably 0.3% by mass or less. Each of these upper limits may be combined with any of the above-described lower limits.

The upper layer 32 may contain one or more noble metal elements other than Rh, in addition to Rh.

The noble metal element other than Rh can be selected, for example, from Pd, Pt, Ru, Ir, Os, and the like. The noble metal element other than Rh is contained in the upper layer 32 in the form capable of functioning as a catalytically-active component, for example, in the form of a catalytically-active component containing the noble metal element other than Rh, such as metal, an alloy containing the noble metal element, a compound containing the noble metal element (e.g., an oxide of the noble metal element), or the like. From the viewpoint of improving the exhaust gas purification performance, the catalytically-active component containing the noble metal element other than Rh is preferably in particulate form.

In the case where the upper layer 32 contains Rh and the noble metal element other than Rh, Rh and the noble metal element other than Rh may form an alloy, thereby reducing active sites of Rh responsible for the exhaust gas purification performance. Accordingly, it is preferable that the content of the noble metal element other than Rh in terms of metal in the upper layer 32 is small. Specifically, the content of the noble metal element other than Rh in terms of metal in the upper layer 32 is preferably 0.05% by mass or less, and more preferably 0.01% by mass or less, based on the mass of the upper layer 32. The lower limit is 0% by mass. The expression "the content of the noble metal element other than Rh in terms of metal in the upper layer 32" refers to: in the case where the upper layer 32 contains a single noble metal element other than Rh, the content of the single noble metal element other than Rh in terms of metal; and in the case where the upper layer 32 contains multiple noble metal elements other than Rh, the total content of the multiple noble metal elements other than Rh in terms of metal.

It is preferable that the upper layer 32 contains one or more carriers, and that at least part of a catalytically-active component is supported on the one or more carriers.

The carrier can be selected, for example, from an inorganic oxide. The description regarding the inorganic oxide is the same as that provided above.

From the viewpoint of improving the heat resistance and/or oxygen storage capacity of the upper layer 32, the carrier is selected preferably from an Al-based oxide, a Ce-based oxide, and a Ce-Zr-based complex oxide, and more preferably from an Al-based oxide and a Ce-Zr-based complex oxide. In one embodiment, the upper layer 32 contains an Al-based oxide and a Ce-Zr-based complex oxide as carriers.

The upper layer 32 may contain La, or may not contain La. In the case where the upper layer 32 contains La, the heat resistance of the upper layer 32 is improved. Moreover, in the case where a Ce-Zr-based complex oxide in the upper layer 32 contains La, the heat resistance and oxygen storage capacity of the Ce-Zr-based complex oxide in the upper layer 32 are improved.

In the case where the upper layer 32 contains La, the upper layer 32 contains one or more La sources. The description regarding the La source is the same as that provided above.

From the viewpoint of improving the heat resistance and/or oxygen storage capacity of the upper layer 32, the La source is preferably selected from an Al-based oxide containing La and a Ce-Zr-based oxide containing La. In one embodiment, the upper layer 32 contains, as La sources, an Al-based oxide containing La and a Ce-Zr-based complex oxide containing La.

From the viewpoint of suppressing a decrease in the exhaust gas purification performance of a noble metal element (particularly Rh) in the upper layer 32 caused by La in the upper layer 32, the content of La in terms of $La_2O_3$ in the upper layer 32 is preferably 4% by mass or less, more preferably 3.5% by mass or less, and still more preferably 3% by mass or less, based on the mass of the upper layer 32. The lower limit may be 0% by mass, or may be more than 0% by mass. In the case where the upper layer 32 contains La, from the viewpoint of effectively exhibiting the action of La, the lower limit is preferably 0.01% by mass or more, more preferably 0.03% by mass or more, and still more preferably 0.05% by mass or more. Each of these lower limits may be combined with any of the above-described upper limits.

The proportion of the mass of La in terms of $La_2O_3$ derived from an Al-based oxide containing La and a Ce-Zr-based oxide containing La to the mass of La in terms of $La_2O_3$ in the upper layer 32 is preferably 70% by mass or more, more preferably 80% by mass or more, and still more preferably 90% by mass or more. The upper limit is 100% by mass.

From the viewpoint of improving the heat resistance of the upper layer 32, the upper layer 32 preferably contains Al.

In the case where the upper layer 32 contains Al, the upper layer 32 contains one or more Al sources. The description regarding the Al source is the same as that provided above. In one embodiment, the upper layer 32 contains, as Al sources, an Al-based oxide and an alumina binder.

From the viewpoint of improving the heat resistance of the upper layer 32, the content of Al in terms of $Al_2O_3$ in the upper layer 32 is preferably 15% by mass or more, more preferably 20% by mass or more, and still more preferably 25% by mass or more, based on the mass of the upper layer 32. The upper limit can be appropriately adjusted in consideration of the balance between the exhaust gas purification performance and the cost, the content of other components, and the like. The upper limit is preferably 90% by mass or less, more preferably 80% by mass or less, and still more preferably 70% by mass or less. Each of these upper limits may be combined with any of the above-described lower limits.

From the viewpoint of improving the oxygen storage capacity of the upper layer 32, the upper layer 32 preferably contains Ce.

In the case where the upper layer 32 contains Ce, the upper layer 32 contains one or more Ce sources. The description regarding the Ce source is the same as that provided above. In one embodiment, the upper layer 32 contains a Ce-Zr-based complex oxide as a Ce source.

From the viewpoint of improving the heat resistance and oxygen storage capacity of the upper layer 32, the upper layer 32 preferably contains Zr.

In the case where the upper layer 32 contains Zr, the upper layer 32 contains one or more Zr sources. The description regarding the Zr source is the same as that provided above. In one embodiment, the upper layer 32 contains a Ce-Zr-based complex oxide as a Zr source.

From the viewpoint of improving the heat resistance and oxygen storage capacity of the upper layer 32, the content of Zr in terms of $ZrO_2$ in the upper layer 32 is preferably 10% by mass or more, more preferably 15% by mass or more, and still more preferably 20% by mass or more, based on the mass of the upper layer 32. The upper limit can be appropriately adjusted in consideration of the balance between the exhaust gas purification performance and the cost, the content of other components, and the like. The upper limit is preferably 95% by mass or less, more preferably 90% by mass or less, and still more preferably 85% by mass or less. Each of these upper limits may be combined with any of the above-described lower limits.

The upper layer 32 may contain components such as a binder and a stabilizer. The description regarding the binder and the stabilizer is the same as that provided above.

< Production of catalyst >

The catalyst 1 can be produced by forming the lower layer 21 on the substrate 10, then forming the upper layer 22 on the lower layer 21, and by forming the lower layer 31 on the substrate 10, then forming the upper layer 32 on the lower layer 31. After the lower layer 21 and the upper layer 22 are formed on the substrate 10, the lower layer 31 and the upper layer 32 may be formed on the substrate 10, or after the lower layer 31 and the upper layer 32 are formed on the substrate 10, the lower layer 21 and the upper layer 22 may be formed on the substrate 10.

The lower layer 21 can be formed by mixing a supply source of a noble metal element (e.g., a salt of a noble metal element such as Pd), optionally a supply source of La (e.g., an Al-based oxide containing La, a Ce-based oxide containing La, or a Ce-Zr-based complex oxide containing La), and optionally other component (e.g., an inorganic oxide other than the supply source of La, a binder such as an alumina binder, a solvent, and the like) to prepare a first slurry, coating the substrate 10 with the first slurry, followed by drying and calcining.

The upper layer 22 can be formed by mixing a supply source of a noble metal element (e.g., a salt of a noble metal element such as Rh), optionally a supply source of La (e.g., an Al-based oxide containing La, a Ce-based oxide containing Al, or a Ce-Zr-based complex oxide containing Al), and optionally other component (e.g., an inorganic oxide other than the supply source of La, a binder such as an alumina binder, a solvent, and the like) to prepare a second slurry, coating the lower layer 21 with the second slurry, followed by drying and calcining.

The lower layer 31 can be formed by mixing a supply source of a noble metal element (e.g., a salt of a noble metal element such as Pt), optionally a supply source of La (e.g., an Al-based oxide containing La, a Ce-based oxide containing La, or a Ce-Zr-based complex oxide containing La), and optionally other component (e.g., an inorganic oxide other than the supply source of La, a binder such as an alumina binder, a solvent, and the like) to prepare a third slurry, coating the substrate 10 with the third slurry, followed by drying and calcining.

The upper layer 32 can be formed by mixing a supply source of a noble metal element (e.g., a salt of a noble metal element such as Rh), optionally a supply source of La (e.g., an Al-based oxide containing La, a Ce-based oxide containing Al, or a Ce-Zr-based complex oxide containing Al), and optionally other component (e.g., an inorganic oxide other than the supply source of La, a binder such as an alumina binder, a solvent, and the like) to prepare a fourth slurry, coating the lower layer 31 with the fourth slurry, followed by drying and calcining.

Examples of the salt of the noble metal element include a nitrate, an ammine complex salt, an acetate, a chloride, and the like. Examples of the binder include an alumina sol, a zirconia sol, a titania sol, a silica sol, a ceria sol, and the like. Examples of the solvent include water, an organic solvent, and the like.

The drying temperature is, for example, 70°C or more and 150°C or less, and the drying time is, for example, 5 minutes or more and 1 hour or less. The calcination temperature is, for example, 200°C or more and 700°C or less, and the calcination time is, for example, 0.5 hours or more and 5 hours or less. The calcination can be carried out, for example, in an air atmosphere.

<< Exhaust gas purification system >>

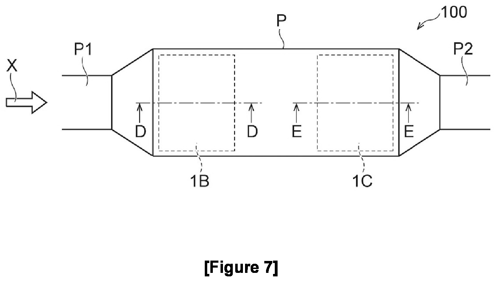

Hereinafter, an exhaust gas purification system 100 will be described with reference to Figures 7 to 9.

As shown in Figure 7, the exhaust gas purification system 100 includes an exhaust pipe P, a first exhaust gas purification catalyst 1B (hereinafter referred to as "catalyst 1B") provided on the upstream side in the exhaust gas path of the exhaust pipe P, and a second exhaust gas purification catalyst 1C (hereinafter referred to as "catalyst 1C") provided on the downstream side in the exhaust gas path of the exhaust pipe P.

One end P1 of the exhaust pipe P is connected to an internal combustion engine (e.g., a gasoline engine), and exhaust gas emitted from the internal combustion engine flows through the exhaust pipe P from the one end P1 to the other end P2. That is, the exhaust pipe P forms an exhaust gas path through which exhaust gas flows. In the drawings, the exhaust gas flow direction is denoted by the reference sign X. The exhaust gas flowing through the exhaust pipe P is treated by the catalyst 1B provided on the upstream side in the exhaust gas path of the exhaust pipe P, and the exhaust gas that passed through the catalyst 1B is treated by the catalyst 1C provided on the downstream side in the exhaust gas path of the exhaust pipe P.

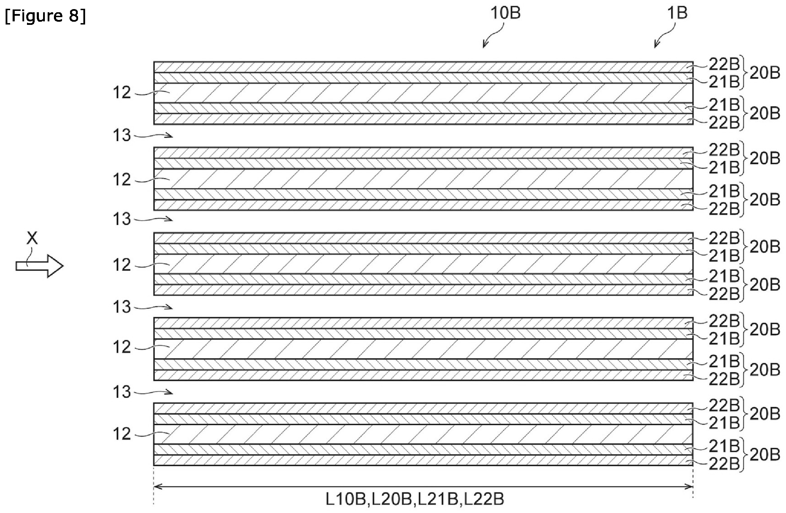

Hereinafter, the catalyst 1B will be described with reference to Figure 8. In the catalyst 1B, the same members as those of the catalyst 1 are denoted by the same reference signs as those of the catalyst 1. Unless otherwise specified below, the above description regarding the catalyst 1 is also applied to the catalyst 1B.

As shown in Figure 8, the catalyst 1B includes a first substrate 10B and a first catalyst layer 20B provided on the first substrate 10B.

As shown in Figure 8, the first catalyst layer 20B includes a lower layer 21B provided on the first substrate 10B and an upper layer 22B provided on the lower layer 21B. The lower layer 21B contains Pd, and the upper layer 22B contains Rh.

The above description regarding the substrate 10 is also applied to the first substrate 10B. Upon application, the "substrate 10" is replaced with the "first substrate 10B".

Unless otherwise specified below, the above description regarding the first catalyst layer 20 is also applied to the first catalyst layer 20B. Upon application, the "first catalyst layer 20" is replaced with the "first catalyst layer 20B".

Unless otherwise specified below, the above description regarding the lower layer 21 and the upper layer 22 of the first catalyst layer 20 is also applied to the lower layer 21B and the upper layer 22B of the first catalyst layer 20B. Upon application, the "lower layer 21" and the "upper layer 22" are replaced with the "lower layer 21B" and the "upper layer 22B", respectively.

As shown in Figure 8, the first catalyst layer 20B, the lower layer 21B, and the upper layer 22B extend from the end on the exhaust gas inflow side of the partition wall 12 to the end on the exhaust gas outflow side of the partition wall 12 along the exhaust gas flow direction X. The first catalyst layer 20B, the lower layer 21B, and the upper layer 22B may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

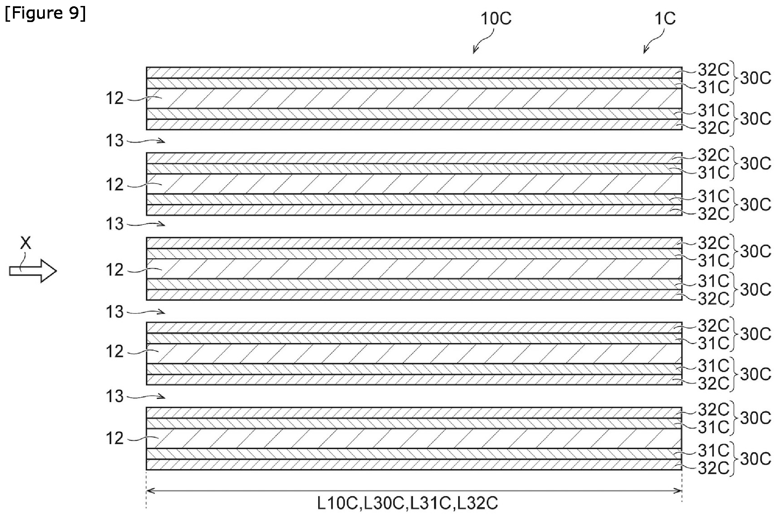

Hereinafter, the catalyst 1C will be described with reference to Figure 9. In the catalyst 1C, the same members as those of the catalyst 1 are denoted by the same reference signs as those of the catalyst 1. Unless otherwise specified below, the above description regarding the catalyst 1 is also applied to the catalyst 1C.

As shown in Figure 9, the catalyst 1C includes a second substrate 10C and a second catalyst layer 30C provided on the second substrate 10C.

As shown in Figure 9, the second catalyst layer 30C includes a lower layer 31C provided on the second substrate 10C and an upper layer 32C provided on the lower layer 31C. The lower layer 31C contains Pt, and the upper layer 32C contains Rh.

The above description regarding the substrate 10 is also applied to the second substrate 10C. Upon application, the "substrate 10" is replaced with the "second substrate 10C".

Unless otherwise specified below, the above description regarding the second catalyst layer 30 is also applied to the second catalyst layer 30C. Upon application, the "second catalyst layer 30" is replaced with the "second catalyst layer 30C".

Unless otherwise specified below, the above description regarding the lower layer 31 and the upper layer 32 of the second catalyst layer 30 is also applied to the lower layer 31C and the upper layer 32C of the second catalyst layer 30C. Upon application, the "lower layer 31" and the "upper layer 32" are replaced with the "lower layer 31C" and the "upper layer 32C", respectively.

As shown in Figure 9, the second catalyst layer 30C, the lower layer 31C, and the upper layer 32C extend from the end on the exhaust gas inflow side of the partition wall 12 to the end on the exhaust gas outflow side of the partition wall 12 along the exhaust gas flow direction X. The second catalyst layer 30C, the lower layer 31C, and the upper layer 32C may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

For the same reasons as described with respect to the catalyst 1, with respect to the first catalyst layer 20B, it is required to increase the content of La in terms of $La_2O_3$ in the first catalyst layer 20B from the viewpoint of improving the heat resistance of the first catalyst layer 20B, rather than decreasing the content of La in terms of $La_2O_3$ in the first catalyst layer 20B from the viewpoint of suppressing a decrease in the exhaust gas purification performance (particularly NOx purification performance) of Rh in the first catalyst layer 20B caused by La in the first catalyst layer 20B, whereas, with respect to the second catalyst layer 30C, it is required to decrease the content of La in terms of $La_2O_3$ in the second catalyst layer 30C from the viewpoint of suppressing a decrease in the exhaust gas purification performance (particularly NOx purification performance) of Rh in the second catalyst layer 30C caused by La in the second catalyst layer 30C, rather than increasing the content of La in terms of $La_2O_3$ in the second catalyst layer 30C from the viewpoint of improving the heat resistance of the second catalyst layer 30C. Accordingly, the exhaust gas purification system 100 is characterized in that the content of La in terms of $La_2O_3$ in the first catalyst layer 20B is 5% by mass or more based on the mass of the first catalyst layer 20B, and that the content of La in terms of $La_2O_3$ in the second catalyst layer 30C is 3% by mass or less based on the mass of the second catalyst layer 30C. The exhaust gas purification system 100 can effectively exhibit the action of La while suppressing a decrease in the exhaust gas purification performance (particularly NOx purification performance) of Rh caused by La, thereby achieving an improvement in the exhaust gas purification performance.

In addition to having an action of improving heat resistance, La has an action of trapping a phosphorus component to prevent phosphorus poisoning of a noble metal element. In the case where a Ce-Zr-based complex oxide contains La, La in the Ce-Zr-based complex oxide has an action of improving the oxygen storage capacity of the Ce-Zr-based complex oxide. These actions of La also contribute to the improvement of the exhaust gas purification performance of the exhaust gas purification system 100.

The larger the average length $L_{20B}$ of the first catalyst layer 20B, the longer the contact time between the first catalyst layer 20B and the exhaust gas becomes. Accordingly, in the case where the conditions other than the average length $L_{20B}$ of the first catalyst layer 20B are the same, the larger the average length $L_{20B}$ of the first catalyst layer 20B, the more effectively the first catalyst layer 20B reacts with the exhaust gas, and the smaller the amount of reducing exhaust gas that reaches the second catalyst layer 30C. As a result, the environment becomes such that the reduction of Rh in the second catalyst layer 30C is less likely to occur. Therefore, in the second catalyst layer 30C where the amount of La, which promotes oxidation of Rh, is small, the reduction of Rh can be more effectively exhibited, and a decrease in the exhaust gas purification performance (particularly NOx purification performance) can be suppressed.

The percentage of the average length $L_{20B}$ of the first catalyst layer 20B to the total length of the length $L_{10B}$ of the first substrate 10B and the length $L_{10C}$ of the second substrate 10C ($L_{20B} / (L_{10B} + L_{10C}) \times 100$) is preferably 30% or more, more preferably 40% or more, and still more preferably 50% or more. The upper limit can be appropriately adjusted in consideration of the balance between the exhaust gas purification performance and the cost, and the like. The upper limit is preferably 90% or less, more preferably 80% or less, and still more preferably 70% or less. Each of these upper limits may be combined with any of the above-described lower limits.

In catalyst 1, the first catalyst layer 20 and the second catalyst layer 30 are provided on a single substrate, and therefore there is a limitation on the average length $L_{20}$ of the first catalyst layer 20. Thus, it may be difficult to increase the average length $L_{20}$ of the first catalyst layer 20. In contrast, in the exhaust gas purification system 100, the first catalyst layer 20B and the second catalyst layer 30C are provided on two separate substrates, respectively, and therefore such a limitation does not exist, which is advantageous.

**EXAMPLES**

Hereinafter, the present invention will be described based on Examples and Comparative Examples.

In the following Examples and Comparative Examples, the fact that all of La in an OSC material formed a solid solution phase was confirmed based on the fact that: a peak derived from $La_2O_3$ did not appear in the XRD diffraction pattern of the OSC material; and when the XRD diffraction pattern of the OSC material was compared with reference data of the crystal structure (fluorite-type $CeO_2$-$ZrO_2$) of the OSC material recorded in the ICSD, a peak shift on the low-angle side relative to the maximum peak position of the reference data was observed in the XRD diffraction pattern of the OSC material. In addition, EDX elemental analysis on the OSC material was performed to calculate the content of La, in terms of $La_2O_3$, that formed a solid solution phase in the OSC material.

In the following Examples and Comparative Examples, the fact that all of La in $La_2O_3$-modified alumina formed a solid solution phase was confirmed based on the fact that: a peak derived from $La_2O_3$ did not appear in the XRD diffraction pattern of the $La_2O_3$-modified alumina; and when the XRD diffraction pattern of the $La_2O_3$-modified alumina was compared with reference data of the crystal structure ($\theta$-alumina) of the $La_2O_3$-modified alumina recorded in the ICSD, a peak shift on the low-angle side relative to the maximum peak position of the reference data was observed in the XRD diffraction pattern of the $La_2O_3$-modified alumina. In addition, EDX elemental analysis on the $La_2O_3$-modified alumina was performed to calculate the content of La, in terms of $La_2O_3$, that formed a solid solution phase in the $La_2O_3$-modified alumina.

**[Example 1]**

(1) Production of first exhaust gas purification catalyst

As described below, a first exhaust gas purification catalyst including a lower layer formed on a flow-through type substrate and an upper layer formed on the lower layer was produced.

(1-1) Preparation of slurry for lower layer formation

An OSC material having the following composition was prepared.

Content of Ce in terms of $CeO_2$: 40.0% by mass

Content of Zr in terms of $ZrO_2$: 51.0% by mass
Content of La in terms of $La_2O_3$: 9.0% by mass (all of La forms a solid solution phase)

To a mixing vessel, an aqueous solution of palladium nitrate, the OSC material, $La_2O_3$-modified alumina (the content of La in terms of $La_2O_3$: 8.0% by mass (all of La forms a solid solution phase)), alumina sol, and water were added, mixed, and stirred to prepare a slurry for lower layer formation. The contents of the components in the slurry for lower layer formation were adjusted so that the content of Pd in terms of metal was 5.0% by mass, the content of the OSC material was 40.0% by mass, the content of the $La_2O_3$-modified alumina was 50.0% by mass, and the solid content of the alumina sol was 5.0% by mass, based on the mass (100% by mass) of the lower layer after calcination.

(1-2) Formation of lower layer

A flow-through type substrate was prepared, which included cells each extending in the axial direction and separated by a partition wall having a thickness of 50 to 70 $\mu$m, at a density of 600 cells/inch$^2$ in a plane perpendicular to the axial direction, had a length of 100 mm in the axial direction, and had a volume of 1.0 L.
The flow-through type substrate was dipped in the slurry for lower layer formation. The flow-through type substrate coated with the slurry for lower layer formation was dried at 150°C for 0.5 hours, and then calcined at 500°C for 1 hour to form a lower layer. The mass of the lower layer per unit volume of the portion of the flow-through type substrate provided with the lower layer was 100 g/L. The length of the lower layer was 100 mm.

(1-3) Preparation of slurry for upper layer formation

An OSC material having the following composition was prepared.

Content of Ce in terms of $CeO_2$: 10.0% by mass
Content of Zr in terms of $ZrO_2$: 81.0% by mass
Content of La in terms of $La_2O_3$: 9.0% by mass (all of La forms a solid solution phase)

To a mixing vessel, an aqueous solution of rhodium nitrate, the OSC material, $La_2O_3$-modified alumina (the content of La in terms of $La_2O_3$: 8.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 1.0% by mass, the content of the OSC material was 40.0% by mass, the content of the $La_2O_3$-modified alumina was 50.0% by mass, and the solid content of the alumina sol was 9.0% by mass, based on the mass (100% by mass) of the upper layer after calcination.

(1-4) Formation of upper layer

The flow-through type substrate on which the lower layer was formed was dipped in the slurry for upper layer formation. The flow-through type substrate coated with the slurry for upper layer formation was dried at 150°C for 0.5 hours, and then calcined at 500°C for 1 hour to form an upper layer on the lower layer. The mass of the upper layer per unit volume of the portion of the flow-through type substrate provided with the upper layer was 80 g/L. The length of the upper layer was 100 mm.
As described above, the first exhaust gas purification catalyst including the lower layer formed on the flow-through type substrate and the upper layer formed on the lower layer was produced.

(2) Production of second exhaust gas purification catalyst

As described below, a second exhaust gas purification catalyst including a lower layer formed on a flow-through type substrate and an upper layer formed on the lower layer was produced.

(2-1) Preparation of slurry for lower layer formation

An OSC material having the following composition was prepared.

Content of Ce in terms of $CeO_2$: 40.0% by mass
Content of Zr in terms of $ZrO_2$: 58.0% by mass
Content of La in terms of $La_2O_3$: 2.0% by mass (all of La forms a solid solution phase)

To a mixing vessel, an aqueous solution of platinum nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for lower layer formation. The contents of the components in the slurry for lower layer formation were adjusted so that the content of Pt in terms of metal was 1.0% by mass, the content of the OSC material was 60.0% by mass, the content of the $La_2O_3$-modified alumina was 30.0% by mass, and the solid content of the alumina sol was 9.0% by mass, based on the mass (100% by mass) of the lower layer after calcination.

(2-2) Formation of lower layer

A flow-through type substrate was prepared, which included cells each extending in the axial direction and separated by a partition wall having a thickness of 50 to 70 $\mu$m, at a density of 600 cells/inch$^2$ in a plane perpendicular to the axial direction, had a length of 100 mm in the axial direction, and had a volume of 1.0 L.

The flow-through type substrate was dipped in the slurry for lower layer formation. The flow-through type substrate coated with the slurry for lower layer formation was dried at 150°C for 0.5 hours, and then calcined at 500°C for 1 hour to form a lower layer. The mass of the lower layer per unit volume of the portion of the flow-through type substrate provided with the lower layer was 140 g/L. The length of the lower layer was 100 mm.

(2-3) Preparation of slurry for upper layer formation

An OSC material having the following composition was prepared.

Content of Ce in terms of $CeO_2$: 10.0% by mass
Content of Zr in terms of $ZrO_2$: 86.0% by mass
Content of La in terms of $La_2O_3$: 4.0% by mass (all of La forms a solid solution phase)

To a mixing vessel, an aqueous solution of rhodium nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 0.2% by mass, the content of the OSC material was 60.0% by mass, the content of the $La_2O_3$-modified alumina was 30.0% by mass, and the solid content of the alumina sol was 9.8% by mass, based on the mass (100% by mass) of the upper layer after calcination.

(2-4) Formation of upper layer

The flow-through type substrate on which the lower layer was formed was dipped in the slurry for upper layer formation. The flow-through type substrate coated with the slurry for upper layer formation was dried at 150°C for 0.5 hours, and then calcined at 500°C for 1 hour to form an upper layer on the lower layer. The mass of the upper layer per unit volume of the portion of the flow-through type substrate provided with the upper layer was 80 g/L. The length of the upper layer was 100 mm.

As described above, the second exhaust gas purification catalyst including the lower layer formed on the flow-through type substrate and the upper layer formed on the lower layer was produced.

(3) Evaluation of exhaust gas purification performance

The first and second exhaust gas purification catalysts thus produced were installed on the upstream and downstream sides of an exhaust gas path of an engine, respectively, and subjected to an aging treatment under the following aging conditions as a degradation treatment simulating driving for 100,000 to 200,000 kilometers.

< Aging conditions >

Engine used for aging test: NA 2L gasoline engine for passenger vehicle

Gasoline used: commercially available regular gasoline
Treatment temperature: 900°C
Treatment time: 100 hours

The first and second exhaust gas purification catalysts after the aging treatment were installed on the upstream and downstream sides of the exhaust gas path of a vehicle (a passenger car equipped with a 1.5 L direct injection turbo engine), respectively, and the vehicle was driven in accordance with the driving conditions of the Worldwide Harmonized Light Vehicles Test Cycle (WLTC). The emission amounts of non-methane hydrocarbons (NMHC) and nitrogen oxides (NOx) in the exhaust gas that had passed through the first and second exhaust gas purification catalysts were measured, and the total emission amount of NMHC and NOx per unit distance driven was determined for each of the following periods: a low-speed driving period from the start of driving to 589 seconds after the start of driving; a medium-speed driving period from 589 to 1022 seconds after the start of driving; a high-speed driving period from 1022 to 1477 seconds after the start of driving; and an ultra-high-speed driving period from 1477 to 1800 seconds after the start of driving. The gasoline used was certified test fuel, and the exhaust gas analyzer used was an exhaust gas analyzer manufactured by HORIBA, Ltd.

**[Example 2]**

The first and second exhaust gas purification catalysts were produced and evaluated for their exhaust gas purification performance in the same manner as in Example 1, except that in the production of the first exhaust gas purification catalyst, the $La_2O_3$-modified amount of the $La_2O_3$-modified alumina in the slurry for lower layer formation was changed to 2.0% by mass.

**[Example 3]**

An OSC material having the following composition was prepared.

Content of Ce in terms of $CeO_2$: 10.0% by mass
Content of Zr in terms of $ZrO_2$: 88.0% by mass
Content of La in terms of $La_2O_3$: 2.0% by mass (all of La forms a solid solution phase)

To a mixing vessel, an aqueous solution of rhodium nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 1.0% by mass, the content of the OSC material was 40.0% by mass, the content of the $La_2O_3$-modified alumina was 50.0% by mass, and the solid content of the alumina sol was 9.0% by mass, based on the mass (100% by mass) of the upper layer after calcination.
The first and second exhaust gas purification catalysts were produced and evaluated for their exhaust gas purification performance in the same manner as in Example 1, except that in the production of the first exhaust gas purification catalyst, the slurry for upper layer formation described above was used.

**[Comparative Example 1]**

(A) Preparation of slurry for lower layer formation

An OSC material having the following composition was prepared.

Content of Ce in terms of $CeO_2$: 40.0% by mass
Content of Zr in terms of $ZrO_2$: 51.0% by mass
Content of La in terms of $La_2O_3$: 9.0% by mass (all of La forms a solid solution phase)

To a mixing vessel, an aqueous solution of platinum nitrate, the OSC material, $La_2O_3$-modified alumina (the content of La in terms of $La_2O_3$: 8.0% by mass (all of La forms a solid solution phase)), alumina sol, and water were added, mixed, and stirred to prepare a slurry for lower layer formation. The contents of the components in the slurry for lower layer formation were adjusted so that the content of Pt in terms of metal was 1.0% by mass, the content of the OSC material was 60.0% by mass, the content of the $La_2O_3$-modified alumina was 30.0% by mass, and the solid content of the alumina sol was 9.0% by mass, based on the mass (100% by mass) of the lower layer after calcination.

(B) Preparation of slurry for upper layer formation

An OSC material having the following composition was prepared.

Content of Ce in terms of $CeO_2$: 10.0% by mass
Content of Zr in terms of $ZrO_2$: 86.0% by mass
Content of La in terms of $La_2O_3$: 4.0% by mass (all of La forms a solid solution phase)

**EP 4 778 626 A1**

To a mixing vessel, an aqueous solution of rhodium nitrate, the OSC material, $La_2O_3$-modified alumina (the content of La in terms of $La_2O_3$: 8.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 0.2% by mass, the content of the OSC material was 60.0% by mass, the content of the $La_2O_3$-modified alumina was 30.0% by mass, and the solid content of the alumina sol was 9.8% by mass, based on the mass (100% by mass) of the upper layer after calcination.

The first and second exhaust gas purification catalysts were produced and evaluated for their exhaust gas purification performance in the same manner as in Example 1, except that in the production of the second exhaust gas purification catalyst, the slurry for lower layer formation prepared in (A) above and the slurry for upper layer formation prepared in (B) above were used.

**[Comparative Example 2]**

(C) Preparation of slurry for lower layer formation

An OSC material having the following composition was prepared.

Content of Ce in terms of $CeO_2$: 40.0% by mass
Content of Zr in terms of $ZrO_2$: 58.0% by mass
Content of La in terms of $La_2O_3$: 2.0% by mass (all of La forms a solid solution phase)

To a mixing vessel, an aqueous solution of palladium nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for lower layer formation. The contents of the components in the slurry for lower layer formation were adjusted so that the content of Pd in terms of metal was 5.0% by mass, the content of the OSC material was 40.0% by mass, the content of the $La_2O_3$-modified alumina was 50.0% by mass, and the solid content of the alumina sol was 5.0% by mass, based on the mass (100% by mass) of the lower layer after calcination.

(D) Preparation of slurry for upper layer formation

An OSC material having the following composition was prepared.

Content of Ce in terms of $CeO_2$: 10.0% by mass
Content of Zr in terms of $ZrO_2$: 88.0% by mass
Content of La in terms of $La_2O_3$: 2.0% by mass (all of La forms a solid solution phase)

To a mixing vessel, an aqueous solution of rhodium nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 1.0% by mass, the content of the OSC material was 40.0% by mass, the content of the $La_2O_3$ modified alumina was 50.0% by mass, and the solid content of the alumina sol was 9.0% by mass, based on the mass (100% by mass) of the upper layer after calcination.

(E) Preparation of slurry for lower layer formation

An OSC material having the following composition was prepared.

Content of Ce in terms of $CeO_2$: 40.0% by mass
Content of Zr in terms of $ZrO_2$: 58.0% by mass
Content of La in terms of $La_2O_3$: 2.0% by mass (all of La forms a solid solution phase)

To a mixing vessel, an aqueous solution of platinum nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for lower layer formation. The contents of the components in the slurry for lower layer formation were adjusted so that the content of Pt in terms of metal was 1.0% by mass, the content of the OSC material was 60.0% by mass, the content of the $La_2O_3$-modified alumina was 30.0% by mass, and the solid content of the alumina sol was 9.0% by mass, based on the mass (100% by mass) of the lower layer after calcination.

(F) Preparation of slurry for upper layer formation

An OSC material having the following composition was prepared.

Content of Ce in terms of $CeO_2$: 10.0% by mass
Content of Zr in terms of $ZrO_2$: 88.0% by mass
Content of La in terms of $La_2O_3$: 2.0% by mass (all of La forms a solid solution phase)

To a mixing vessel, an aqueous solution of rhodium nitrate, the OSC material, $La_2O_3$-modified alumina (the content of La in terms of $La_2O_3$: 2.0% by mass (all of La forms a solid solution phase)), alumina sol, and water were added, mixed, and stirred to prepare a slurry for upper layer formation. The contents of the components in the slurry for upper layer formation were adjusted so that the content of Rh in terms of metal was 0.2% by mass, the content of the OSC material was 60.0% by mass, the content of the $La_2O_3$-modified alumina was 30.0% by mass, and the solid content of the alumina sol was 9.8% by mass, based on the mass (100% by mass) of the upper layer after calcination.

The first and second exhaust gas purification catalysts were produced and evaluated for their exhaust gas purification performance in the same manner as in Example 1, except that in the production of the first exhaust gas purification catalyst, the slurry for lower layer formation prepared in (C) above and the slurry for upper layer formation prepared in (D) above were used, and that in the production of the second exhaust gas purification catalyst, the slurry for lower layer formation prepared in (E) above and the slurry for upper layer formation prepared in (F) above were used.

**[Comparative Example 3]**

The first and second exhaust gas purification catalysts were produced and evaluated for their exhaust gas purification performance in the same manner as in Example 1, except that in the production of the first exhaust gas purification catalyst, the slurry for lower layer formation prepared in (C) of Comparative Example 2 and the slurry for upper layer formation prepared in (D) of Comparative Example 2 were used, and that in the production of the second exhaust gas purification catalyst, the slurry for lower layer formation prepared in (A) of Comparative Example 1 and the slurry for upper layer formation prepared in (B) of Comparative Example 1 were used.

The results are shown in Tables 1 and 2. In Table 2, the total emission amount of NMHC and NOx is expressed as a relative value when the value of Comparative Example 3 is set to 1.

**[Table 1]**

Table 1

| | First Exhaust Gas Purification Catalyst | | | | | | | | | Second Exhaust Gas Purification Catalyst | | | | | | | | |
|---|---|---|---|---|---|---|---|---|---|---|---|---|---|---|---|---|---|---|
| | Lower Layer | | | | Upper Layer | | | | | Lower Layer | | | | Upper Layer | | | | |
| | (A1) | (A2) | (A3) | (A4) | (B1) | (B2) | (B3) | (B4) | (C) | (D1) | (D2) | (D3) | (D4) | (E1) | (E2) | (E3) | (E4) | (F) |
| Example 1 | Pd | 7.6 | 9.0 | 8.0 | Rh | 7.6 | 9.0 | 8.0 | 7.6 | Pt | 1.8 | 2.0 | 2.0 | Rh | 3.0 | 4.0 | 2.0 | 2.2 |
| Example 2 | Pd | 4.6 | 9.0 | 2.0 | Rh | 7.6 | 9.0 | 8.0 | 5.9 | Pt | 1.8 | 2.0 | 2.0 | Rh | 3.0 | 4.0 | 2.0 | 2.2 |
| Example 3 | Pd | 7.6 | 9.0 | 8.0 | Rh | 1.8 | 2.0 | 2.0 | 5.0 | Pt | 1.8 | 2.0 | 2.0 | Rh | 3.0 | 4.0 | 2.0 | 2.2 |
| Comparative Example 1 | Pd | 7.6 | 9.0 | 8.0 | Rh | 7.6 | 9.0 | 8.0 | 7.6 | Pt | 7.8 | 9.0 | 8.0 | Rh | 4.8 | 4.0 | 8.0 | 6.7 |
| Comparative Example 2 | Pd | 1.8 | 2.0 | 2.0 | Rh | 1.8 | 2.0 | 2.0 | 1.8 | Pt | 1.8 | 2.0 | 2.0 | Rh | 1.8 | 2.0 | 2.0 | 1.8 |
| Comparative Example 3 | Pd | 1.8 | 2.0 | 2.0 | Rh | 1.8 | 2.0 | 2.0 | 1.8 | Pt | 7.8 | 9.0 | 8.0 | Rh | 4.8 | 4.0 | 8.0 | 6.7 |

(A1), (D1): the noble metal element in the lower layer
(A2), (D2): the content of La in terms of $La_2O_3$ in the lower layer (the mass percentage based on the mass of the lower layer)
(A3), (D3): the content of La in terms of $La_2O_3$ that forms a solid solution phase in the OSC material (the mass percentage based on the mass of the OSC material)
(A4), (D4): the content of La in terms of $La_2O_3$ that forms a solid solution phase in the $La_2O_3$-modified alumina (the mass percentage based on the mass of the $La_2O_3$-modified alumina)
(B1), (E1): the noble metal element in the upper layer
(B2), (E2):the content of La in terms of $La_2O_3$ in the upper layer (the mass percentage based on the mass of the upper layer)
(B3), (E3): the content of La in terms of $La_2O_3$ that forms a solid solution phase in the OSC material (the mass percentage based on the mass of the OSC material)
(B4), (E4): the content of La in terms of $La_2O_3$ that forms a solid solution phase in the $La_2O_3$-modified alumina (the mass percentage based on the mass of the $La_2O_3$-modified alumina)
(C), (F): the total content of La in terms of $La_2O_3$ in the lower and upper layers (the mass percentage based on the total mass of the lower and upper layers)

**[Table 2]**

Table 2

|  | Total Emission Amount of NMHC and NOx |
| --- | --- |
| Example 1 | 0.79 |
| Example 2 | 0.85 |
| Example 3 | 0.88 |
| Comparative Example 1 | 0.91 |
| Comparative Example 2 | 0.94 |
| Comparative Example 3 | 1 |

The first exhaust gas purification catalysts of Examples 1 to 3 and Comparative Examples 1 to 3 include a first substrate and a first catalyst layer (a lower layer and an upper layer) provided on the first substrate, and the first catalyst layer contains Rh. The second exhaust gas purification catalysts of Examples 1 to 3 and Comparative Examples 1 to 3 include a second substrate and a second catalyst layer (a lower layer and an upper layer) provided on the second substrate, and the second catalyst layer contains Rh.

The first and second exhaust gas purification catalysts of Examples 1 to 3 satisfy the following conditions:

the content of La in terms of $La_2O_3$ in the first catalyst layer is 5% by mass or more based on the mass of the first catalyst layer; and
the content of La in terms of $La_2O_3$ in the second catalyst layer is 3% by mass or less based on the mass of the second catalyst layer.

The first and second exhaust gas purification catalysts of Comparative Examples 1 to 3 do not satisfy one or more of the above conditions.

As shown in Table 2, the exhaust gas purification performance in the case where the first exhaust gas purification catalyst satisfying the above conditions was installed on the upstream side of the exhaust gas path and the second exhaust gas purification catalyst satisfying the above conditions was installed on the downstream side of the exhaust gas path (Examples 1 to 3) was higher than that in the case where the first exhaust gas purification catalyst not satisfying one or more of the above conditions was installed on the upstream side of the exhaust gas path and the second exhaust gas purification catalyst not satisfying one or more of the above conditions was installed on the downstream side of the exhaust gas path (Comparative Examples 1 to 3).

**DESCRIPTION OF REFERENCE SIGNS**

P                        ... Exhaust pipe of internal combustion engine
1, 1B, 1C            ... Exhaust gas purification catalyst
10, 10B, 10C       ... Substrate
11                       ... Tubular member
12                       ... Partition wall
13                       ... Cell
20, 20B              ... First catalyst layer
21, 21B              ... Lower layer of first catalyst layer
22, 22B              ... Upper layer of first catalyst layer
30, 30C              ... Second catalyst layer
31, 31C              ... Lower layer of second catalyst layer
32, 32C              ... Upper layer of second catalyst layer
100                     ... Exhaust gas purification system

**Claims**

1. An exhaust gas purification catalyst comprising:

   a substrate;
   a first catalyst layer provided on an upstream side of the substrate; and
   a second catalyst layer provided on a downstream side of the substrate,
   wherein the first catalyst layer comprises a lower layer containing Pd and an upper layer containing Rh,
   wherein the second catalyst layer comprises a lower layer containing Pt and an upper layer containing Rh,
   wherein a content of La in terms of $La_2O_3$ in the first catalyst layer is 5% by mass or more based on a mass of the first catalyst layer, and
   wherein a content of La in terms of $La_2O_3$ in the second catalyst layer is 3% by mass or less based on a mass of the second catalyst layer.

2. The exhaust gas purification catalyst as claimed in claim 1,

   wherein a content of a noble metal element other than Pt in terms of metal in the lower layer of the second catalyst layer is 1% by mass or less based on a mass of the lower layer of the second catalyst layer, and
   wherein a content of La in terms of $La_2O_3$ in the lower layer of the second catalyst layer is 2% by mass or less based on a mass of the lower layer of the second catalyst layer.

3. The exhaust gas purification catalyst as claimed in claim 1 or 2,

   wherein a content of La in terms of $La_2O_3$ in the upper layer of the first catalyst layer is 5% by mass or more based on a mass of the upper layer of the first catalyst layer, and
   wherein a content of La in terms of $La_2O_3$ in the upper layer of the second catalyst layer is 4% by mass or less based on a mass of the upper layer of the second catalyst layer.

4. An exhaust gas purification system comprising:

   an exhaust gas path through which exhaust gas flows;
   a first exhaust gas purification catalyst provided on an upstream side of the exhaust gas path; and
   a second exhaust gas purification catalyst provided on a downstream side of the exhaust gas path,
   wherein the first exhaust gas purification catalyst comprises a first substrate and a first catalyst layer provided on the first substrate,
   wherein the second exhaust gas purification catalyst comprises a second substrate and a second catalyst layer provided on the second substrate,
   wherein the first catalyst layer comprises a lower layer containing Pd and an upper layer containing Rh,
   wherein the second catalyst layer comprises a lower layer containing Pt and an upper layer containing Rh,
   wherein a content of La in terms of $La_2O_3$ in the first catalyst layer is 5% by mass or more based on a mass of the first catalyst layer, and
   wherein a content of La in terms of $La_2O_3$ in the second catalyst layer is 3% by mass or less based on a mass of the second catalyst layer.

5. The exhaust gas purification system as claimed in claim 4,

   wherein a content of a noble metal element other than Pt in terms of metal in the lower layer of the second catalyst layer is 1% by mass or less based on a mass of the lower layer of the second catalyst layer, and
   wherein a content of La in terms of $La_2O_3$ in the lower layer of the second catalyst layer is 2% by mass or less based on a mass of the lower layer of the second catalyst layer.

6. The exhaust gas purification system as claimed in claim 4 or 5,

   wherein a content of La in terms of $La_2O_3$ in the upper layer of the first catalyst layer is 5% by mass or more based on a mass of the upper layer of the first catalyst layer, and
   wherein a content of La in terms of $La_2O_3$ in the upper layer of the second catalyst layer is 4% by mass or less based on a mass of the upper layer of the second catalyst layer.

[Figure 1]

[Figure 2]

[Figure 3]

[Figure 4]

[Figure 5]

EP 4 778 626 A1

[Figure 6]

[Figure 7]

[Figure 8]

10B    1B

22B 20B
21B
12
21B 20B
22B

13

22B 20B
21B
12
21B 20B
22B

13

X

22B 20B
21B
12
21B 20B
22B

13

22B 20B
21B
12
21B 20B
22B

13

22B 20B
21B
12
21B 20B
22B

L10B,L20B,L21B,L22B

[Figure 9]

L10C,L30C,L31C,L32C

EP 4 778 626 A1

## INTERNATIONAL SEARCH REPORT

International application No.

**PCT/JP2024/032523**

### A. CLASSIFICATION OF SUBJECT MATTER

*B01J 23/63*(2006.01)i; *B01D 53/94*(2006.01)i; *B01J 35/57*(2024.01)i; *F01N 3/10*(2006.01)i; *F01N 3/28*(2006.01)i
FI:  B01J23/63 A ZAB; B01J35/57 L; B01D53/94 222; B01D53/94 245; B01D53/94 280; F01N3/10 A; F01N3/28 301Q

According to International Patent Classification (IPC) or to both national classification and IPC

### B. FIELDS SEARCHED

Minimum documentation searched (classification system followed by classification symbols)

B01J21/00-B01J38/74; B01D53/34-B01D53/73; B01D53/74-53/85; B01D53/92; B01D53/96; F01N3/00; F01N3/02; F01N3/04-3/38; F01N9/00-11/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-527152 A (BASF CORPORATION) 31 May 2022 (2022-05-31)<br>claims, examples | 1-6 |
| A | JP 2012-152702 A (TOYOTA JIDOSHA KABUSHIKI KAISHA) 16 August 2012 (2012-08-16)<br>claims, examples | 1-6 |
| A | JP 2019-136695 A (MITSUI MINING & SMELTING CO., LTD.) 22 August 2019 (2019-08-22)<br>claims, examples | 1-6 |
| A | JP 2018-199094 A (CATALER CORP.) 20 December 2018 (2018-12-20)<br>claims, examples | 1-6 |
| A | JP 2010-69380 A (DAIHATSU MOTOR CO., LTD.) 02 April 2010 (2010-04-02)<br>claims, examples | 1-6 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2024** | **10 December 2024** |

| Name and mailing address of the ISA/JP | Authorized officer |
|---|---|
| **Japan Patent Office (ISA/JP)**<br>3-4-3 Kasumigaseki, Chiyoda-ku, Tokyo 100-8915<br>Japan | Telephone No. |

Form PCT/ISA/210 (second sheet) (July 2022)

**INTERNATIONAL SEARCH REPORT**
Information on patent family members

International application No.

**PCT/JP2024/032523**

| Patent document cited in search report | | | Publication date (day/month/year) | Patent family member(s) | | | Publication date (day/month/year) |
|---|---|---|---|---|---|---|---|
| JP | 2022-527152 | A | 31 May 2022 | US claims, examples WO KR CN | 2022/0161236 2020/190999 10-2021-0129143 113574255 | A1 A1 A A | |
| JP | 2012-152702 | A | 16 August 2012 | (Family: none) | | | |
| JP | 2019-136695 | A | 22 August 2019 | (Family: none) | | | |
| JP | 2018-199094 | A | 20 December 2018 | EP claims, examples WO | 3632537 2018/216817 | A1 A1 | |
| JP | 2010-69380 | A | 02 April 2010 | (Family: none) | | | |

Form PCT/ISA/210 (patent family annex) (July 2022)

# EP 4 778 626 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011167631 A

- JP 2011183317 A